(19) Europäisches Patentamt
European Patent Office
Office européen des brevets

(11) Veröffentlichungsnummer: **0 037 855**
**A1**

# (12) EUROPÄISCHE PATENTANMELDUNG

(21) Anmeldenummer: **80108098.7**

(22) Anmeldetag: **22.12.80**

(51) Int. Cl.³: **B 01 D 17/02**

(30) Priorität: **14.04.80 DE 3014204**
**23.06.80 DE 3023384**

(43) Veröffentlichungstag der Anmeldung: **21.10.81**
**Patentblatt 81/42**

(84) Benannte Vertragsstaaten: **AT BE CH DE FR GB IT LI LU NL SE**

(71) Anmelder: **Hammerschmitt, Nikolaus, Kölner Strasse 138, D-5350 Euskirchen (DE)**

(72) Erfinder: **Hammerschmitt, Nikolaus, Kölner Strasse 138, D-5350 Euskirchen (DE)**

## (54) Verfahren und Vorrichtung zum kontinuierlichen Trennen der Komponenten eines Flüssigkeitsgemisches unterschiedlicher spezifischer Gewichte.

(57) Die Erfindung bezieht sich auf ein Verfahren und eine Vorrichtung zum kontinuierlichen Trennen einer Leichtflüssigkeit wie Öl von einer Schwerflüssigkeit wie Wasser. Das Gemisch wird zunächst in eine in Schwerflüssigkeit ganz oder teilweise eintauchende Abscheidekammer (4) geführt, welche einen Zuführungsraum oder Zuführungsleitung (2a, 56), mindestens einen Sammelraum ($4a_1$) für eine in einer bestimmten Dicke aufrechtzuerhaltende Leichtflüssigkeitsschwimmschicht, und einen sich daran nach unten anschließenden Bereich aus Schwerflüssigkeit aufweist, in welchem eine weitere Beruhigung und Trennung des zuströmenden Gemisches stattfindet. Zwischen der Abscheidekammer und dem Schwerflüssigkeitsabfluß des Abscheiders durchströmt dabei die Schwerflüssigkeit mindestens einen weiteren Abscheideraum in Längsrichtung, so daß noch mitgeführte Anteile der Leichtflüssigkeit von spezifisch höherem Gewicht, die in der Abscheidekammer (4) noch nicht aufgeschwommen sind, sich in dem Abscheideraum (2b) absetzen und aufschwimmen können.

Fig.25
Schnitt B-B
71
8'
$8_1$
7
A
A
$8_2$
64
9
70
$4a_2$
$4'a_1$
65
2 a
4b
4
2b
72
37

EP 0 037 855 A1

Anmelder: Herr Nikolaus Hammerschmitt
Kölner Str. 138
535o Euskirchen

Bezeichnung: Verfahren und Vorrichtung zum kontinuierlichen Trennen der Komponenten eines Flüssigkeitsgemisches unterschiedlicher spezifischer Gewichte.

Die Erfindung bezieht sich auf ein Verfahren zum kontinuierlichen Trennen der Komponenten eines Flüssigkeitsgemisches unterschiedlicher spezifischer Gewichte, insbesondere zum Trennen einer Leichtflüssigkeit wie Öl oder Benzin von einer Schwerflüssigkeit wie Wasser, unter Verwendung einer aus einem Zuleitungsraum für das Flüsligkeitsgemisch und einem Sammelraum für die Leichtflüsligkeit bestehenden, in eine Schwerflüssigkeit eintauchenden, sich nach unten öffnenden Abscheidekammer, sowie eines außerhalb dieser Abscheidekammer befindlichen Tauchrohres zum Abfluß von Schwerflüssigkeit zu einer das Schwerflüssigkeitsniveau im Normalzustand der Trennvorrichtung bestimmenden Auslauföffnung, und mit einer Überlauföffnung oberhalb des im Normalzustand sich ausbildenden Schwerflüssigkeitsniveaus zum Abfluß der Leichtflüssigkeit. Desweiteren bezieht sich die Erfindung auf eine Vorrichtung zur Durchführung dieses Verfahrens.

Trennvorrichtungen zum Trennen eines Flüssigkeitsgemisches aus Flüssigkeiten unterschiedlicher spezifischer Gewichte und zum Abziehen von als Schwimmschicht abgesetzter Leichtflüssigkeit sind nach der DT-AS 26 lo 773 bekannt.

Derartige Leichtflüssigkeitsabscheider werden in der Regel dort eingebaut, wo große Mengen Abwasser mit einem geringen Prozentsatz Leichtflüssigkeit verschmutzt sind. Dies ist z. B. der Fall bei Autoreparaturbetrieben, Tankstellen, Tanklager, automatischen Autowaschstraßen, Entkonservierungsanlagen für neue Kraftfahrzeuge und dergleichen.

Bei dem Leichtflüssigkeitsabscheider nach der DT-AS 26 lo 773 wird die Trennung der Leichtflüssigkeiten, wie Diesel- und Heizöl, Benzin, Benzol, Filteröl und anderen Ölen von Schmutzwasser durch Scherkraft bewirkt, wobei nach einer bestimmten Verweilzeit im Abscheideraum auf dem die Schwerflüssigkeit darstellenden Schmutzwasser sich eine schwimmende Leichtflüssigkeitsschicht ausbildet, welche durch Anheben des Schwerflüssigkeitsspiegels in eine mit einer großflächigen Öffnung versehenen, in der Höhe des Flüssigkeitsspiegels der Leichtflüssigkeit einjustierte Absaugvorrichtung gedrückt wird.

Bei einer derartigen Vorrichtung sind aufwendige Vorkehrungen nötig, um die Leichtflüssigkeit unter Vermeidung eines Mitabsaugens von Schwerflüssigkeit abzuführen.

Da man den Flüssigkeitsspiegel der Schwerflüssigkeit je nach Dicke der aufschwimmenden Leichtflüssigkeitsschicht steigen oder fallen läßt, müssen besondere Sperrventile und Steuervorrichtungen des Flüssigkeitsabscheiders vorgesehen werden, die verhindern, daß bei Beseitigung der Flüssigkeitsschicht weiter Schwerflüssigkeit mit abgesaugt wird.

Derartige Steuermaßnahmen sind aufwendig und können ein Mitabsaugen von Schwerflüssigkeit nicht mit absoluter Sicherheit verhindern.

Weiterhin gestalten sich die Wartungsarbeiten derartiger Flüssigkeitsabscheider aufwendig und problematisch. Es gilt dabei insbesondere Umweltschutzvorschriften einzuhalten , die der Reinhalt_ung des Grundwassers dienen. So sind vom Gesetzgeber bei den Abscheidern Wartungsintervalle je nach Anfall der Verschmutzungsmöglichkeiten von zumindest jedem halben Jahr vorgeschrieben, wobei bei den bekannten Leichtflüssigkeitsabschiedern aus diesen ausgebrachte Schlammschichten verbrannt werden müssen, da der Schlamm nicht ohne auf dem Wasserspiegel aufschwimmenden Ölschicht ausbringbar ist.

Desweiteren gilt es, die Reinigung der Schwerflüssigkeiten mit einem Wirkungsgrad von über 97% entsprechend neuer Umweltverordnungen zu erreichen, und dabei auch die abgeschiedene Leichtflüssigkeit mit einem möglichst hohen Wirkungsgrad abzuschieden.

Schließlich soll trotz möglichst konstruktiv einfacher Ausbildung des Abscheiders trotz des hohen Wirkungsgrades seiner Abscheidung eine möglichst hohe Durchflußleistung erreichbar sein.

Bei dem Flüssigkeitsabscheider nach der US-PS lo69789 erfolgt die Abführung der Leichtflüssigkeit ähnlich wie bei dem Abscheider nach der DT-AS 26 lo 773 aufgrund plötzlich eintretender hoher Flüssigkeitsschwankungen durch innerhalb eines in Schwerflüssigkeit eingetauchten ,nach unten offenen Fallenkörpers, wobei in einem Zuleitungsraum des Fallenkörpers einfließende und in einen Sammelraum für Leitflüssigkeit übertretende und dort ansteigende Schwerflüssigkeit die dortige Leichtflüssigkeit zum Abfluß bringt.

Durch die außerhalb des Fallenkörpers anstehende Schwerflüssigkeit kann dabei eine Dämpfung der Strömung im Fallenkörper erreicht wird, so daß sich in diesem keine gasförmigen Bestandteile der Leichtflüssigkeit bilden, welche außerhalb des Fallenkörpers geraten könnten. Da die Leichtflüssigkeit in dem Fallenkörper durch plötzlich eintretenden erhöhten Zufluß von Flüssigkeit abgedrückt wird, insofern als erhebliche Strömungen im Fallenkörper vorhanden sind,und Leichtflüssigkeit durch die untere Öffnung des Fallenkörpers in ein dort unmittelbar angrenzendes Tauchrohr mit der Schwerflüssigkeit abfließen kann, ist sowohl der Wirkungsgrad der Leichtflüssigkeits- als auch der Schwerflüssigkeitsabschiedung relativ gering.

Die Aufgabe der vorliegenden Erfindung besteht somit darin, ein Verfahren zur kontinuirlichen Trennung und Abführung der Komponenten eines Flüssigkeitsgemisches aus Leicht- und Schwerflüssigkeit sowie eventuell anfallenden Schlamm zu schaffen, bei dem selbsttätig mit großer Sicherheit und ohne Verwendung besonderer Steuer- oder Kontrollvorrichtungen ein erheblich besserer Wirkungsgrad der Trennung sowohl bezüglich der Schwer- als auch Leichtflüssigkeitskomponenten erzielt wird, wobei bei der Reinigung der Schwerflüssigkeit ein Wirkungsgrad von über 97% erreichbar sein soll, um neuen Umweltschutzverordnungen zu entsprechen.

Dabei sollen sich auch die Wartungsarbeiten des Abscheiders bedeutend vereinfachen.

Zur Lösung der genannten Aufgabe ist bei einem Verfahren zum kontinuirlichen Trennen der Komponenten eines Flüssigkeitsgemisches der eingangs genannten Art vorgesehen, daß bei Aufrechterhaltung eines im wesentlichen konstanten Schwerflüssigkeitsniveaus durch Begrenzung geeigneter Zu- bzw. Ablaufmengen, das Flüssigkeitsgemisch aus dem Zuführungsraum in den Sammelraum in oder unterhalb der abgeschiedenen Leichtflüssigkeitsschwimmschicht geführt wird, daß die sich nach unten öffnende Abscheidekammer derartig abgemessen und zum äußeren Schwerdlüssigkeitsspiegel angeordnet wird, daß sich in dem Sammelraum bzw. in der Abscheidekammer unterhalb des äußeren Schwerflüssigkeitsniveaus entsprechend der Höhenanordnung des Ablaufes für Leichtflüssigkeit gegenüber dem äußeren Schwerflüssigkeitsniveau und der unterschiedlichen spezifischen Gewichte von Schwer-und Leichtflüssigkeit eine maximale Leichtflüssigkeitsschicht als Puffer gegen Schwerflüssigkeitsströmungen von zugeflossenem Flüssigkeitsgemisch ausbildet, wobei im unteren Bereich der Abscheidekammer unter der Leichtflüssigkeitsschicht eine zusätzliche Abscheidung und Beruhigung der Anteile der Liechtflüssigkeit, insbesondere von spezifisch leichterem Gewicht, erfolgt, und daß die aus der Abscheidekammer austretende Flüssigkeit unterhalb eines strömungsfreien Abschiederaumes geführt wird, bevor die Schwerflüssigkeit über das Tauchrohr zum Abfluß gebracht wird.

Der eingetauchte Wandabschnitt der Abscheidekammer unterhalb des äußeren Schwerflüssigkeitsniveaus bis zum unteren Bereich der Abschiedekammer, also der Grenzschicht zwischen Schwer- u. Leichtflüssigkeit, berechnet sich dabei aus der Höhenanordnung h des Ablaufes für Leichtflüssigkeit gegenüber dem äußeren Schwerflüssigkeitsniveau und der spezifischen Gewichte von Schwer- und Leichtflüssigkeit $s_{L.Fl.}$ und $s_{Sch.Fl.}$ nach der Formel :

$$s_{L.Fl.} / ((s_{Sch.Fl.} - (s_{L.Fl.} \cdot s_{Sch.Fl.}) )$$

Erfindungsgemäß wird also im Sammelraum für die Leichtflüssigkeit bzw. in der Abscheidekammer ein Leichtflüssigkeitsschwimmschicht großer Mächtigkeit im oberen Bereich ausgebildet und aufrecht erhalten, wobei diese Schwimmschicht gegenüber zufließendes Flüssigkeitsgemisch eine Puffer- und Trennwirkung bewirkt, insofern also ein Abfließen von Schwerflüssigkeit in den Leichtflüssigkeitsablauf verhindert, die Trennung der Schwerflüssigkeit fördert und die Strömung des zuströmenden Flüssigkeitsgemisches abbremst.

Es wird somit im Gegensatz zu den eingangs erwähnten Verfahren eine Leichtflüssigkeitsschwimmschicht im wesentlichen konstanter Höhe aufrecht erhalten, wobei das Abwassergemisch derart zugeführt wird, daß in der eingetauchten unten offenen Abscheidekammer sich übereinander oder nebeneinander Schwer- und Leichtflüssigkeit absetzen und durch zuströmende Leichtflüssigkeit dessen Flüssigkeitsniveau angehoben und somit die Leichtflüssigkeit wie auch die Schwerflüssigkeit kontinuirlich selbsttätig ablaufen kann.

Die Anordnung des unteren Bereichs in der Abscheidekammer mit Schwerflüssigkeit und die außerhalb der Abscheidekammer diese umströmende Schwerflüssigkeit hat dabei die Aufgabe aufgrund der vorhandenen relativ großen Strömungsgeschwindigkeit bei einer relativ großen Trennleistung mitgeführte Leichtflüssigkeit, welche nur einen relativ geringen Auftrieb aufweist, welcher gegenüber derStrömungs- bzw. der Fallgeschwindigkeit der durchströmenden Schwerflüssigkeit nicht zur Wirkung kommt,abzubremsen und abzuscheiden.

In dem Bereich der Schwerflüssigkeit außerhalb der Glocke, in welchen keine Strömung von abfallender Schwerflüssigkeit mehr vorliegt, kann dabei die Leichtflüssigkeit dann aufsteigen und in geeigneter Weise abgeführt werden.

Das erfindungsgemäße Verfahren ermöglicht somit mit hohem Wirkungsgrad und Sicherheit im Flüssigkeitsgemisch zulaufende Leicht- und Schwerflüssigkeit voneinander kontinuirlich zu trennen, sobald sich im Tank der Trennvorrichtung und in der dortigen Flüssigkeit eingetauchten Abscheidekammer sich bis zu dem oberhalb des Flüssigkeitsspiegels der Schwerflüssigkeit gelegenen

...

Ausfluß bzw. Überlauf für die Leichtflüssigkeit die vorgesehenen Flüssigkeitsstände bzw. Niveaus eingestellt haben. Die Anlage von Saugleitungen bzw. Pumpen zum Abführen der getrennten Leicht- und Schwerflüsigkeitsanteile ist dabei nicht mehr notwendig. Die Ableitung erfolgt vielmehr selbsttätig. Auch bedarf es keiner besonderen Kontrollvorrichtungen mehr, um zu gewährleisten, daß durch den Ausfluß der Leichtflüssigkeit keine Schwerflüssigkeit austreten kann, da die Schwerflüssigkeit unmittelbar in den Schlammfangtank absinkt und durch den dort vorgesehenen Abfluß im wesentlichen auf konstanter Höhe gehalten wird.

Wird auf diese Weise z. B. Öl von Wasser getrennt, so kann das mit großer Reinheit abgeschiedene Öl in einen Altöltank gesammelt werden, um dann aufgearbeitet zu werden. Eventuell mit in die Abscheidekammer geführter Schlamm läßt sich dabei nach Anhebung desSchwerflüssigkeitsspiegels außerhalb der Abscheidekammer und Abführung der dort vorhandenen Leichtflüssigkeitsschwimmschicht von Anteilen mit spezifisch schwererem Gewicht ohne derartige Verunreinigung ausbringen, so daß der Schlamm nicht mehr so wie bisher üblich verbrannt werden muß. Da auch bei Zuflußn größerer Mengen von Schwerflüssigkeit diese mit relativ großer Durchflußgeschwindigkeit durch die Trennvorrichtung geführt und kontinuirlich abgeschieden und abgeführt wird, im Gegensatz zu einem bisher üblichen Schlammfangtank diese also nicht zum Abstzen der Bestandteile längere Zeit in einem Tank gehalten werden muß, läßt sich die Trennvorrichtung bzw. der dazu notwendige Tank für die Schwerflüssigkeit mit der dort eingetauchten Abscheidekammer in relativ geringen Abmaßen ausbilden.

Das Niveau der Schichthöhe der Leichtflüssigkeit im oberen Bereich des Behälters bis zu dem Ablauf bzw. Überlauf des Abführstutzens der Leichtflüssigkeit

oberhalb des äußeren Schwerflüssigkeitsspiegels läßt sich dabei durch eine geeignete Auswahl der Länge des Ablaufstutzens einstellen, vorausgesetzt daß der Mantel der Abscheidekammer eine genügende Länge besitzt bzw. genügend tief in die äußere Schwerflüssigkeit eingetaucht ist.

Durch eine Entlüftung der Abscheidekammer und des Bereichs oberhalb der äußeren Schwerflüssigkeit ist es dabei möglich, den Abfluß der Leicht- und Schwerflüssigkeit bzw. deren Trennvorgang unter den übersichtlichen Druckverhältnissen der äußeren Atmosphäre erfolgen zu lassen, wobei verhindert wird, daß sich schädliche Gase bzw. Drücke in dem Abscheider ansammeln bzw. bilden.

Die Abführung der gereinigten Schwerflüssigkeit erfolgt über ein Tauchrohr, wobei, ähnlich wie über einen Abführstutzen, die Schwerflüssigkeit abfließt und dabei keine Restleitflüssigkeit wie Öl oder dergleichen, welche auf der Oberfläche der Schwerflüssigkeit aufschwimmt mit abfließen kann. Gleichzeitig wird durch die Anlage des entlüfteten Tauchrohrs erreicht, daß durch die abfließende Schwerflüssigkeit nicht Schwerflüssigkeit unterhalb des Auslaufes des Ablaufstutzens bzw. Tauchrohres mit abfließen kann.

Maßgeblich für die Güte der Trennung von Schwer- und Leichtflüssigkeit ist dabei die Ausbildung einer ausreichenden konstanten Schichtdicke an Leichtflüssigkeit im oberen Bereich der Abscheidekammer sowie eine Anordnung des Abflußes der Leichtflüssigkeit in geeigneter Höhe oberhalb des maximal auftretenden äußeren Schwerflüssigkeitsniveaus, so daß die abgeschiedene Leichtflüssigkeit nicht durch plötzlich nachfließende Schwerflüssigkeit verunreinigt werden kann. Die Schichthöhe der Leichtflüssigkeit

unterhalb des äußeren Schwerflüssigkeitsniveaus beträgt dabei bei Öl je nach dessen Dichte etwa das 3 1/2 - 9fache der Schichthöhe des Öls oberhalb des äußeren Schwerflüssigkeitsspiegels, so daß sich bei einem Anstieg der Leichtflüssigkeit um 3 cm eine eingetauchte Schichthöhe von 27 cm ergibt.

Sofern sich die nach unten öffnende Abscheidekammer sich nicht in voller Querschnittsbreite öffnet oder aus anderen Gründen das Einbringen eines Flüssigkeitsgemisches mit Schlamm oder das Ausbringen des sich am Boden des Tankes abgesetzten Schlammes auf Schwierigkeiten stößt, ist in vorteilhafter Ausgestaltung des erfindungsgemäßen Verfahrens vorgesehen, daß der Trennvorrichtung mit der Abscheidekammer ein Schlammfangtank vorgeschaltet ist, wobei die Strömung des Flüssigkeitsgemisches zunächst dort beruhigt und die Komponenten des Gemisches vorab geschieden werden. Zur Entnahme des sich dort absetzendes Schlammes ohne Leichtflüssigkeit wie Öle und dergleichen wird dabei die Leichtflüssigkeit durch Zuleitung von Schwerflüssigkeit in den Schlammfangtank in die nachgeschaltete Trennvorrichtung abgedrückt. Um eine möglichst gute Vorabscheidung von Leicht- und Schwerflüssigkeit zu erreichen, erfolgt dabei die Abführung des aufschwimmenden Flüssigkeitsgemisches vom Schlammfangtank in die Trennvorrichtung über eine in den Flüssigkeitsspiegel des Gemisches im vorgeschalteten Schlammfangtank eingetauchte, etwa halbkreisförmige Einlaufzunge mit einer zum Flüssigkeitsspiegel nach oben abgebogenen Randabkantung, so daß stetig ein Gemisch aus Leicht- und Schwerflüssigkeit der Zuführungsleitung der Trennvorrichtung durch Zufluß von neuem zu klärenden Abwassergemisch zugeleitet wird.

Ein derartiges Verfahren unter Verwendung eines separaten Schlammfangtankes entspricht den für bestimmte Verwendungszwecke eines Leicht- und Schwerflüssigkeitsabscheiders bestehenden Vorschriften und ermöglicht die nachfolgende Trennvorrichtung aufgrund des nicht ausfallenden Schlammes konstruktiv einfacher auszubilden, wobei der Schlamm als solcher natürlich auch aus einem separaten Schlammfangtank leichter ausbringbar ist. Insofern erübrigt sich dann bei Verwendung eines separaten Schlammfangtankes die Anlage von Zwillings- oder Drillingsanlagen von Trennvorrichtungen bei denen Abwasser mit einem großen Schlammanteil einbringbar wäre.

Die Verwendung der halbkreisförmigen Einlaufzunge mit eingetauchter Randabkantung, wobei die Sohle der Zunge tiefer als der Flüssigkeitsspiegel liegt, bringt den Vorteil mit sich, daß feine Schichten von aufgeschwommener Leichtflüssigkeit durch den Sog der über die Zunge abfließenden Flüssigkeit über die ganze Oberfläche des Schlammfangtankes zur Zunge hin in Art einer Saugwirkung angezogen werden.

Um das Schwerflüssigkeitsniveau in der Trennvorrichtung innerhalb und außerhalb der Abscheidekammer im wesentlichen konstant zu erhalten, so daß zumindest keine Schwerflüssigkeit über den Auslauf oder Überlauf für die Leichtflüssigkeit abfließen kann, werden Mittel in der Trennvorrichtung,insbesondere im Zuführungsraum und am Abfluß vorgesenen, die zu einer Verringerung der Schwankungen insbesondere des Flüssigkeitsspiegels der Schwerflüssigkeit an der Grenzschicht zwischen dem oberen und unteren Teil der Abscheidekammer führen und die Strömungsgeschwindigkeit des einfließenden und aus der Abscheidekammer ausfließenden Flüssigkeitsgemisches reduzieren.

So findet ein in seiner Grundfläche etwa rechteckiger Tank Verwendung, in dessen Breite in geeignetem Abstand zum Tankboden die Abscheidekammer sich in voller Länge erstreckt, wobei die Auslauföffnung der Schwerflüssigkeit und dessen Tauchrohr ebenfalls in geeignetem Abstand von der Abscheidekammer unter Bildung eines strömungsfreien Abscheideraumes zum Aufstieg mitgeführte Leichtflüssigkeitsanteile von spezifisch höherem Gewicht als über die ganze Breite des Tankes sich erstreckende Schachtschleuse ausgebildet ist.

In vorteilhafter Ausgestaltung des erfindungsgemäßen Verfahrens ist desweiteren vorgesehen, beispielsweise durch Verwendung einer Schachtschleuse oder Rinnenschleuse zwischen der Abscheidekammer und dem Abscheideraum einen Schwerflüssigkeitsspiegel in der Abscheidekammer zu erzeugen, der höher liegt als der im Abscheideraum, wobei im Sammelraum für die Leichtflüssigkeit ein Schwerflüssigkeitsniveau entsprechend dem in dem Abscheideraum erzeugt wird. Dabei wird in vorteilhafter Ausgestaltung im Zuführungsraum auffließende Leichtflüssigkeit in geeignetem Abstand vom Einlauf des Flüssigkeitsgemisches unmittelbar über einen Überlauf in den Sammelraum für Leichtflüssigkeit eingeleitet.

Aufgrund des somit im Sammelraum für Leichtflüssigkeit abgesenkten Schwerflüssigkeitspiegels kann sich dort eine höhere Leichtflüssigkeitssäule ausbilden, so daß sich entsprechend größere Schwerflüssigkeitsschwankungen am Auslauf der Trennvorrichtung bei plötzlichem Zufluß größerer Mengen von Flüssigkeitsgemisch einstellen können, ohne daß Schwerflüssigkeit in den Abfluß für Leichtflüssigkeit einfließen kann.

Eine derartige Absenkung des Schwerflüssigkeitsspiegels gegenüber dem in der Abscheidekammer bzw in der gesamten Trennvorrichtung, kann sich auch dann als vorteilhaft erweisen, wenn als Sicherheitsvorkehrung gegen zu hohen Anstieg der Leichtflüssigkeitssäule im Sammelraum mit diesen ein Behälter mit einer weiteren Leichtflüssigkeitssäule als Sicherheitsüberlauf verbunden ist, wobei in diesem Behälter dann die Leichtflüssigkeitssäule mit abgesenktem Schwerflüssigkeitsspiegel erzeugt wird, so daß auch bei plötzlichem Zufluß von Schwerflüssigkeit in diesen Behälter und Anstieg des Schwerflüssigkeitsniveaus in diesem dieser Anstieg der Schwerflüssigkeit noch nicht zu einem größeren Anstieg der Schwerflüssigkeit in der eigentlichen Trennvorrichtung führt.

Um eine Überwachung des Standes der Grenzschicht zwischen Leicht- und Schwerflüssigkeit in der Abscheidekammer bzw. im Sammelraum für die Leichtflüssigkeit überflüssig zu machen, ist in vorteilhafter Ausführungsform vorgesehen, einen Ölsicherheitsablauf zu verwenden, welcher unterhalb der Grenzschicht in der Abscheidekammer bzw. dem Sammelraum einmündet. Auf diese Weise kann bei plötzlicher Zufuhr von Flüssigkeitsgemisch und Leichtflüssigkeit verhindert werden, daß die Leichtflüssigkeit sich in den unteren Bereich der Abscheidekammer ausdehnt bzw. in die außerhalb der Abscheidekammer befindliche Schwerflüssigkeit eintritt. Eine besondere Sicherheitsvorkehrung zur Erhaltung des vorgeschriebenen Spiegels der Schwerflüssigkeit in der Einmündungskammer ist dabei insofern nicht notwendig, als der maximale Flüssigkeitsstand der Schwerflüssigkeit in der Einmündungskammer durch den maximalen Schwerflüssigkeitsstand außerhalb der Einmündungskammer bestimmt wird, wobei insbesondere durch Anordnung des Ablaufs der Schwerflüssigkeitüber die ganze Breite der Trennvorrichtung und damit unter beträchtlicher Vergrößerung des Strömungsquerschnittes der einzelnen Abscheiderstufen, welche dem im Öffnungsquerschnitt geringer bemessenen Einlauffolgen, ein im wesentlichen konstanter Schwerflüssigkeitsspiegel H gewährleistet ist.

Aufgrund der unterschiedlich bemessenen Öffnungsquerschnitte der Zuführungsleitung im Einlauf und des Tauchrohres im Auslauf wird dabei auch erreicht, daß ein mit relativ großer Geschwindigkeit der Trennvorrichtung zuströmendes Abwassergemisch in der Trennvorrichtung eine erheblich verringerte Strömungsgeschwindigkeit aufweist, so daß die Schwerflüssigkeit scheinbar im

0037855

Abscheider ruht und somit sich ein konstanter Schwerflüssigkeitsspiegel mit dem Niveau H dort ausbildet.

In vorteilhafter Weise wird dabei der Ölsicherheitsablauf in einen seitlich über die Höhe der Trennvorrichtung angelegten Längskanal angelegt, in welchem ein Überlauf in einen Sammelbehälter für Altöl und ein Auslauf für zugeströmte Schwerflüssigkeit angelegt ist. Dabei kann der Raum selber derart groß bemessen sein, daß die überlaufende Leichtflüssigkeit bzw. das Öl dort bis zu einem gewissen Umfang aufgenommen werden kann.

Die unterschiedlichen Schwerflüssigkeitsniveaus vor dem Ablauf der Trennvorrichtung können dabei dadurch erhalten werden, daß vor dem Ablauf der Schwerflüssigkeit ein weiterer Überlauf angeordnet ist, der in seiner Höhe niedriger als die niedrigste der zur ersten Abscheidekammer gerichteten Trennwandungen bzw. Schleusenwandungen ist, der oberhalb des Ablaufes der Schwerflüssigkeit bzw. in Höhe desssen Ablauföffnung ausläuft und sich vorzugsweise über die gesamte Abscheiderbreite erstreckt und über ein Tauchrohr bzw. einen in der Breite des Abscheiders ausgebildeten Kanal zum Boden des Abscheiderraumes in die dortige leichtflüssigkeitsfreie Zone geführt ist.

Gemäß einer weiteren vorteilhaften Ausgestaltung des erfindungsgemäßen Verfahrens wird dabei in dem neben dem Zuführungsraum angeordnete Sammelraum bzw. Speicher für Leichtflüssigkeit durch eine geeignete Einmündung und Anordnung einer Abflußöffnung für die sich im Speicher absetzende Schwerflüssigkeit ein mit dem tieferen Flüssigkeitsniveau in den nachfolgenden Abscheideraum kommunizierendes Flüssigkeitsniveau unter Ausbildung einer möglichst hohen Leichtflüssigkeitssäule erzeugt, beispielsweise durch Verwen-

dung eines Tauchrohrs, das vom Boden des Speichers zu einer auf geeigneter Höhe gelegenen Abflußöffnung reicht.

Zur weiteren Verringerung der Strömungsgeschwindigkeit in der Abscheidekammer ist desweiteren vorgesehen, diese als nach unten trichterartig sich verbreiternde Einmündungsglocke auszubilden, welche beispielsweise im Querschnitt rund oder entsprechend der Abmessung der Breite der Trennvorrichtung ebenfalls rechteckig ausgebildet werden kann.

Bei einer derartigen Form der Abscheidekammer läßt sich trotz Zufluß größerer Flüssigkeitsgemische eine Trennung von Leicht- und Schwerflüssigkeit in der Abscheidekammer bereits zu einem großen Teil erreicht, wobei die Abscheidung allein aufgrund der Wirkung der Schwerkraft erfolgt und die zufließende Schwerflüssigkeit sofort in den unteren Bereich der Trennvorrichtung abfließt, und die Leichtflüssigkeit in den höheren Bereich des Behälters zurückerhalten wird bzw. aufsteigt. Dabei sinkt je nach Höhe der Einleitungstelle des Flüssigkeitsgemisches in der Abscheidekammer die Schwerflüssigkeit ab bzw. steigt die Leichtflüssigkeit auf, wobei durch Zufluß weiterer Leichtflüssigkeit diese schließlich ohne Beimischung von Schwerflüssigkeit aus ihrem gegenüber dem Ablauf für Schwerflüssigkeit höher gelegenen Auslauf abfließt.

Der Flüssigkeitsspiegel der Schwerflüssigkeit und das Niveau der Schichthöhe der Leichtflüssigkeit im oberen Bereich der Abscheidekammer sowie die sich aufbauende Leichtflüssigkeitshöhe bis zu deren Auslauf oberhalb des äußeren Schwerflüssigkeitsspiegels läßt sich dabei durch Zuleitung geeigneter Abwassergemischmengen bzw. durch vorheriges Füllen der Trennvorrichtung und Abscheidekammer mit Schwerflüssigkeit bis zu dessen maximalen Stand sowie durch einen in die Schwerflüssigkeit des Abscheiders ragenden, mit dem Ablauf verbundenen

Ablaufstutzen, Tauchrohr oder Steigkanal, der mit dem Auslauf der Schwerflüssigkeit verbunden ist, einstellen. Der in die Schwerflüssigkeit ragende Ablaufstutzen ermöglicht es dabei die nachdrückende Schwerflüssigkeit aus dem unteren Teil des Schlammfangtankes unmittelbar über den Stutzen abzuführen, ohne das größere Strömungen entstehen. Andererseits erlaubt es die am oberen Bereich der Abscheidekammer angeschlossene Leitung zum Ausfluß der Leichtflüssigkeit, daß die gesamte in die Abscheidekammer nachfließende Leichtflüssigkeit abfließen kann.

Eine Entlüftung dieser Trennvorrichtung und der Aus- und Ablaufleitungen für den Abfluß der Leicht- und Schwerflüssigkeit ermöglicht es dabei, den Abscheidevorgang unter den übersichtlichen Druckverhältnissen der äußeren Atmosphäre erfolgen zu lassen und verhindert dabei insbesondere, daß sich schädliche Gase bzw. Drücke in dem Abscheider bilden.

Da die in die Einmündungskammer zufließende Schwerflüssigkeit den Ausgleich mit dem Schwerflüssigkeitsspiegel außerhalb der Abscheidekammer sucht und insofern auch noch einen Druck auf die Sohle der Leichtflüssigkeit ausübt, wird durch das Gewicht der anstehenden Leichtflüssigkeitsschicht die Schwerflüssigkeit mit zum Abfluß gebracht. Aufgrund der sich nach unten trichterartig vergrößernden Querschnittsabmessung der Abscheidekammer bzw. Glocke verringert sich der auf die abfließende Schwerflüssigkeit einstellende Druck, so daß durch die trichterartige Ausbildung der Glocke eine weitere Beruhigung der Strömung der Schwerflüssigkeit eintritt.

Sofern die Abscheidekammer bzw. die Glocke sich nach oben trichterartig verengt, läßt sich eine hohe Schichthöhe der Leichtflüssigkeit bei einer verhältnismäßig geringen Menge von Leichtflüssigkeit in der Glocke erreichen, so daß sich eine gute Trennung der Gemischanteile ergibt und ein geringes Volumenverhältnis von Leicht-

flüssigkeit oberhalb des äußeren Schwerflüssigkeitsspiegels zu der unterhalb dieses Spiegels.

Eine Verringerung der Strömungsgeschwindigkeit in der Glocke bzw. in der Einmündungskammer läßt sich desweiteren dadurch erzielen, daß am unteren Bereich der Glocke ein sich nach außen verbreitender Düsenkörper vorgesehen ist.

Zur Durchführung des erfindungsgemäßen Verfahrens unter Verwendung einer aus einem Zuleitungsraum für das Flüssigkeitsgemisch und einem Sammelraum für die Leichtflüssigkeit bestehenden, in eine Schwerflüssigkeit eintauchende, sich nach unten öffnenden Abscheidekammer, sowie mit einem außerhalb dieser Abscheidekammer befindlichen Tauchrohr bzw. Steigkanal zum Abfluß von Schwerflüssigkeit zu einer das Schwerflüssigkeitsniveau im Normalzustand der Trennvorrichtung bestimmenden Auslauföffnung und mit einer Überlauföffnung oberhalb des im Normalzustand sich ausbildenden Schwerflüssigkeitsniveaus zum Abfluß der Leichtflüssigkeit ist erfindungsgemäß eine derartige Trennvorrichtung vorgesehen, bei welcher der Zuführungsraum im Sammelraum in oder unterhalb der abgeschiedenen Leichtflüssigkeitsschwimmschicht mündet, die sich nach unten öffnende Abscheidekammer, eine derartige Abmessung und Anordnung zum äußeren Schwerflüssigkeitsspiegel aufweist, daß die Länge des unter das Schwerflüssigkeitsniveau im Normalzustand eingetauchten Wandungsabschnittes der Abscheidekammer größer ist als die Höhe der sich im Sammelraum bzw. in der Abscheidekammer unterhalb des äußeren Schwerflüssigkeitsniveaus entsprechend der Höhenanordnung des Überlaufes für Leichtflüssigkeit und der unterschiedlichen spezifischen Gewichte sich maximal bildenden Leichtflüssigkeitsschicht ($H - H_1$), wobei der untere Bereich der Abscheidekammer unter der Leichtflüssigkeitsschicht einen zusätzlichen Abscheideraum bzw. Beruhigungsraum für Anteile der Leichtflüssigkeit von spezifisch leichterem Gewicht bildet, die Überlauföffnung für die Leichtflüssigkeit durch ein in den Sammelraum mündendes Rohr gebildet wird, und die Anordnung der Überlauföffnung dieses Rohres oberhalb des durch die möglichen Zulauf- und Ablaufmengen bestimmten maximalen Schwerflüssigkeitsniveaus (H) erfolgt, und die Anordnung des Tauchrohres bzw. Steigkanales für den Abfluß der Schwerflüssigkeit im Abstand von der Abscheidekammer bzw. deren unteren Öffnung unter Bildung eines strömungfreien Abscheideraumes erfolgt, wobei gegebenenfalls vorhandene spezifisch schwerere Anteile der Leichtflüssigkeit auf dem Weg von der unteren Öffnung der Abscheidekammer zum Tauchrohr nach oben in die ruhige Schwerflüssigkeit des Abscheideraumes aufströmen kann.

0037855

Um eine Vermischung des zu trennenden Gemisches aus Leicht- und Schwerflüssigkeit in der Abscheidekammer bzw. im Sammelraum für die Leichtflüssigkeit zu vermeiden, wird das Flüssigkeitsgemisch vorzugsweise in eine sich nach unten öffnende Einmündungsglocke bzw. Abscheidekammer derart geführt, daß es unterhalb der im oberen Bereich der Einmündungsglocke bzw. der Einmündungskammer befindlichen Leichtflüssigkeitsschicht zugeführt wird. Zur Abbremsung der Strömungsgeschwindigkeit des zufließenden Gemisches und um dieses seitlich möglichst über die gesamte Querschnittsfläche der Schwerflüssigkeitssäule zu verteilen, wird das Einlaufrohr am Ende mit einem Prallteller versehen, welcher oben und unten eine geschlossene Scheibe aufweist, so daß sich lediglich seitlich des Einlaufrohres ein Außtritt für die Flüssigkeit öffnet.

Eine weitere Verbesserung der Schichtung von Leicht- und Schwerflüssigkeit bzw. Trennung dieser Flüssigkeiten wird dadurch erreicht, daß an dem Rand der unteren Öffnung der Einmündungsglocke bzw. der Abscheidekammer eine nach innen sich erstreckende Restölauffangrinne vorgesehen wird. Dadurch wird verhindert, daß bei Absenkung des Schwerflüssigkeitsspiegels, z. B. bei Wartungsarbeiten, in der Abscheidekammer Restöl von innen an der Wandung abläuft und in die gereinigte Schwerflüssigkeit gelangt. Desweiteren kann zu einer besseren Trennung des Flüssigkeitsgemisches nach Unterströmung des beruhigten Abscheideraumes seitlich der Abscheidekammer der Zulauf des Tauchrohres bzw. des Ablaufstuzens für die Schwerflüssigkeit mit einem weiteren Ölabscheider in Form einer zu unterfließenden Quersperre versehen werden.

In vorteilhafter Weise wird dabei das Tauchrohr für den Ablauf der Schwerflüssigkeit koaxial von außen mit einem Überrohr versehen, daß sich vom Boden des Raumes für den Leichtflüssigkeitabscheider fast bis zum Flüssigkeitsspiegel der Schwerflüssigkeit außer-

halb der Abscheidekammer erstreckt. Das Überrohr kann dabei seinerseits von außen koaxial mit einer Einmündungsglocke versehen sein, die nach oben in die Wandung des Tauchrohres übergeht und nach unten das Überrohr übergreift.

Dadurch, daß man das einströmende Flüssigkeitsgemisch auf die Strömung abbremsende Mittel, wie ein Prallblech oder Lochblech, außerhalb oder im unteren Bereich der Abscheidekammer führt, läßt sich neben einer Dämpfung der der Strömung, ohne dabei die Durchflußleistung in einem erheblichen Maße zu verringern, erreichen, daß dort eine Abscheidung bzw. Trennung der Bestandteile des Flüssigkeitsgemisches eintritt. Wesentlich ist dabei, daß der Durchlaßraum in den Wandungen in einem breiten Querschnitt durchflossen wird, so daß trotz vorgesehener Prallflächen und Lochflächen auch bei plötzlich stark zunehmendem Durchfluß ohne Rückstau die Schwerflüssigkeit abfließen kann und zwar mit einer Geschwindigkeit, die möglichst gering ist, so daß die Fallgeschwindigkeit der Flüssigkeit in der Abscheidekammer möglichst nicht höher als die Austrittsgeschwindigkeit der Leichtflüssigkeit ist, welche von der Flüssigkeit mitgerissen wird. Um die Fallgeschwindigkeit und Strömungsgeschwindigkeit der Flüssigkeit in der Trennvorrichtung zu verringern, ist dabei nicht nur die Länge des Strömungsweges der Flüssigkeit von Bedeutung, sondern auch die Querschnittsfläche mit welcher die Trennvorrichtung durchflossen wird und somit das Flüssigkeitsvolumen welches von der Trennvorrichtung aufnehmbar ist. Meßungen bei einem Leichtflüssigkeitsabscheider von einem Querschnitt von 1,2 x1,7m und einer Höhe von 1,3 m mit einer runden sich nach unten trichterförmig auf 1,1m Durchmesser verbreitenden Einmündungsglocke haben dabei ergeben, daß bei einer Durchflußleistung von 6 l/sec von zugeführtem Flüssigkeitsgemisch sich am unteren Rand der Einmündungsglocke eine Strömungs- bzw. Fallgeschwindigkeit von 5 mm/sec einstellt, wobei die Strömungsgeschwindigkeit bei einem Zufluß von lediglich 1 l/sec auf wenige mm pro sec verringern läßt, so daß die Auftriebsgeschwindigkeit der meisten abzuscheidenden Ölpartikel innerhalb der Glocke unter der Strömungsgeschwindigkeit des Abscheiders zu liegen kommt. Eine weitere Abscheidung des Öls erfolgt dann außerhalb der Einmündungsglocke in dem sich anschliessenden strömungsfreien Abscheideraum bevor dann die Schwerflüssigkeit mit einem hohen Reinheitsgrad von über 98 % abgeführt wird. (Bei einem Durchfluß von 2 l und entsprechend einer Nennweite des Zuflußes von 2 wird ein Reinheitsgrad des Wassers von 99,9 % erreicht).

Schwankungen des Schwerflüssigkeitsniveaus innerhalb der Abscheidekammer lassen sich desweiteren dadurch verringern, daß der Öffnungsquerschnitt der Abführleitungen zum Auslauf für die Leichtflüssigkeit relativ gering gewählt wird, so daß die in einer oben geschlossenen Abscheidekammer anstehende Leichtflüssigkeit nur gegen einen erhöhten Strömungswiderstand bei plötzlichem Ansteigen des Schwerflüssigkeitsspiegels in der Abscheidekammer zum Abfluß gebracht werden kann.

Die zum Ausgleich von Wasserspiegelschwankungen vorgesehenen Schacht- oder Rinnenschleusen am Einlauf bzw. Ablauf des Abscheiders führen dabei zu einer erheblichen Beruhigung der Strömung in diesem unter Ermöglichung einer relativen Durchflußleistung.

Um den unteren Bereich der Abscheidekammer in genügender Größe auszubilden, und damit möglichst einen großen Anteil von Leichtflüssigkeit in der Abscheidekammer zu scheiden, ist die Begrenzungswandung der Abscheidekammer derart ausgebildet, daß sie sich in einer Länge des Zwei- bis Vierfachen der Strecke $H$-$H_1$ in den die geklärte Schwerflüssigkeit aufnehmenden Tank unterhalb des Niveaus $H$ der äußeren Schwerflüssigkeit erstreckt.

Um die im oberen Bereich der als durchgehenden Raum ausgebildeten Abscheidekammer aufgeschwommene Leichtflüssigkeitsschicht nicht durch zufließendes Gemisch aus Leicht- und Schwerflüssigkeit zu verunreinigen bzw. aufzuwirbeln erfolgt die Zuleitung des zu trennenden Gemisches in einer bevorzugten Ausführungsform seitlich im unteren Bereich der Abscheidekammer unterhalb der Grenzschicht in der Höhe des Niveaus $H_1$ über ein dort mündendes Zuführungsrohr.

Die Zuleitung des Flüssigkeitsgemisches erfolgt dabei vorzugsweise auf ein über die Breite der Abscheidekammer sich erstreckendes schräg in die Abscheidekammer angeordnetes, nach oben in die Mitte des oberen Bereiches der Abscheidekammer und nach unten seitlich zur Wandung des unteren Bereiches der Abscheidekammer ausgerichtetes Prallblech.

Auf diese Weise wird erreicht, daß auf dem schräg nach oben in den oberen Bereich der Abscheidekammer gerichtetes Prallblech das Flüssigkeitsgemisch sich in Leicht- und Schwerflüssigkeit schon zu einem großen Teil trennt, wobei die Leichtflüssigkeit in den oberen Bereich der Abscheidekammer aufsteigt und die Schwerflüssigkeit an dem Prallblech in den unteren Bereich der Abscheidekammer abfließt. Der sich in seine beiden Komponenten aufteilende Flüssigkeitsstrahl wird dabei in der im wesentlichen ruhenden Schwer- und Leichtflüssigkeit weiter abgebremst und in seine Bestandteile aufgeteilt.

Aufgrund der Trennung der Strömung von Leicht- und Schwerflüssigkeit wird dabei insbesondere erreicht, daß die Leichtflüssigkeit nicht durch die ein oder ausströmende Schwerflüssigkeit bzw. das Flüssigkeitsgemisch in den oberen Bereich des Einmündungsraumes gedrückt bzw. aus dem dortigen Auslauf rausgedrückt wird. Vielmehr läuft die Leichtflüssigkeit in den oberen Bereich der Abscheidekammer allein durch nachfließende Leichtflüssigkeit kontinuierlich aus dem dortigen Auslauf ab.

Das schräg unterhalb der Zuleitung angeordnete Prallblech bietet dabei andererseits für die nun von der Seite des Abscheiders unter ihr entlangfließende Flüssigkeit eine Abdeckung zur Bildung eines strömungsfreien Raumes, wobei dort aufströmende Leichtflüssigkeit von spezifisch schwererem Gewicht sich dort absetzen und aufströmen kann und schließlich in die Leichtflüssigkeitsschwimmschicht oberhalb des Prallbleches gelangt. Das Prallblech ist dabei in geeigneter Weise entsprechend der Strömungsrichtung der Flüssigkeit im Abscheider seitlich fortgesetzt, so daß sich ein größerer Bereich zur Bildung des strömungsfreien Abscheideraumes ergibt.

Als weiteres Mittel ist neben dem Prallblech und dem unter ihm gebildeten strömungsfreien Raum sowie einem in der unteren Querschnittsfläche der Abscheidekammer angeordneten Lochblech zur Verbesserung der Abscheidung vor der Schacht-oder Rinnenschleuse bzw. dem Tauchrohr des Ablaufes der Schwerflüssigkeit eine Leichtflüssigkeitssperre vorgesehen. Als solche dient dabei eine vom Boden des Tankes der Trennvorrichtung parallel zur Wandung des Tankes geführte Wandung, welche vorteilhafterweise von einem hutartigen Überblech mit einer oberen Öffnung für sich absetzende Leichtflüssigkeit abgedeckt ist. Da die Leichtflüssigkeitssperre über die gesamte Breite der Trennvorrichtung verläuft, ist dabei der durch die Sperre hervorgerufene Strömungswiderstand relativ klein.

Die Wandung der Leichtflüssigkeitssperre, der Rinnen- und Schachtschleuse sowie des Überbleches sind dabei in einem derartigen Abstand gesetzt, daß in der zu durchfließenden Ölsperre zunächst sich eine höhere Flüssigkeitsgeschwindigkeit der in das hutartige Überblech einströmenden Flüssigkeit einstellt, welche aufgrund ihrer aufsteigenden Strömung das Abscheiden und Aufsteigen von noch mitgeführter Leichtflüssigkeit durch die Öffnung in dem hutartigen Überblech begünstigt. Gleichzeitig kann aufgrund der sich im Zwischenraum der Ölsperre ausbildenden höheren Geschwindigkeit ein Übergang zu der gegenüber der Geschwindigkeit in der Trennvorrichtung herrschenden höheren Geschwindigkeit des Steigrohres bzw. der Schachtschleuse stattfinden.

Eine weitere Verringerung des Strömungswiderstandes des Abscheiders ergibt sich dabei dadurch, daß unterhalb des Überlaufes die Schwerflüssigkeit eine Überlaufkammer vorgesehen ist, aus der die Schwerflüssigkeit in den Überlauf des Abscheiders für die Schwerflüssigkeit abfließt, welcher unterhalb des Überlaufes angelegt ist.

Um bei Störungen und bei plötzlich zunehmenden starken Zufluß von Abwassergemisch zum Abscheider und somit stark steigender Leichtflüssigkeitsschicht die Funktion des Abscheiders nicht zu beeinträchtigen bzw. die abgeschiedenen Flüssigkeiten nicht zu verunreinigen, ist am Auslauf der Leichtflüssigkeit in der Abscheidekammer ein als Sicherheitsüberlauf liegender Behälter mit einer Alarmanlage vorgesehen, wobei die oberhalb des Niveaus h abgeschiedene Leichtflüssigkeit durch den Behälter des Sicherheitsüberlaufes fließt und dort in einer säulenartigen Speicherkammer eine Leichtflüssigkeitsschicht bildet, welche bei Funktionsstörungen in eine als Sicherheitsüberlauf seitlich der Speicherkammer im Betrieb mit Wasser gefüllte weitere Kammer mit einem Auslöser für eine elektrische Alarmanlage fließt. Die Auslösung der elektrischen Alarmanlage in der zweiten Kammer kann dabei in bekannter Weise durch einen sich mit Leichtflüssigkeit füllenden, durch Verschwenkung der Alarmanlage auslösenden Becher oder durch einen Schwimmer erfolgen. Die Säule der Leichtflüssigkeit in der Speicherkammer kann dabei bedeutend in der Höhe vergrößert werden, in dem dem eigentlichen Überlauf für die Schwerflüssigkeit wie vorstehend erwähnt, ein tiefer angeordneter Überlauf für Schwerflüssigkeit nachgeordnet ist, welcher in Verbindung mit dem Behälter des Sicherheitsüberlaufes steht und somit in diesem ein geringeres Schwerflüssigkeitsniveau $\hat{H}$ gegenüber dem Schwerflüssigkeitsniveau H in dem ersten Überlauf bzw. der Abscheidekammer der Trennvorrichtung erzeugt.

In vorteilhafter Ausbildung wird bei Verwendung einer Einmündungsglocke als Abscheidekammer die Glocke im oberen Bereich, in dem sich die Leichtflüssigkeit ansammelt mit einem sich verengenden Ansatz versehen, der im wesentlichen den oberen Bereich zur Aufnahme der Leichtflüssigkeit bildet. Die Glocke ist dabei zur Bildung des unteren Bereiches der Abscheidekammer weit in den Tank der Trennvorrichtung geführt, so daß über einen großen Bereich der Glocke Leichtflüssigkeit sich von der Schwerflüssigkeit absetzen und nach oben in den oberen Bereich bzw. in den im Querschnitt verengten Fortsatz aufströmen kann. Der im Querschnitt verengte Fortsatz weist dabei den Vorteil auf, daß die Grenzschichtfläche zwischen Leicht- und Schwerflüssigkeit relativ gering ist und dabei an dieser Stelle nur eine begrenzte Vermischung bzw. Verwirbelung zwischen den beiden Flüssigkeiten auftreten kann.

Von weiterem Vorteil ist dabei die Ausbildung der in der Glocke einmündenden Zuführungsleitung für das Schwerflüssigkeitsgemisch in Form einer düsenartigen Verbreiterung, wobei die Zuführungsleitung bis unterhalb der Grenzschicht zwischen Schwer- und Leichtflüssigkeit bzw. dem sich in seinen Querschnitt verengenden Fortsatz geführt ist.

Die düsenartige Verbreiterung, welche in die sich trichterartig verbreitende Einmündungsglocke ragt, führt dabei zu einer weiteren Verengung des Durchflusses zwischen unteren und oberen Bereich der Einmündungsglocke und damit zu einer weiteren Trennung dieser beiden Bereiche.

Die Erfindung und weitere bevorzugte Ausführungsformen sind desweiteren anhand der Zeichnungen erläutert, wobei sich vorteilhafte Ausbildungen auch aus den Patentansprüchen ergeben.

In den Zeichnungen zeigen:

Figur 1 einen Längsschnitt durch einen Leichtflüssigkeitsabscheider mit einer sich nach unten trichterförmig verbreitenden glockenförmigen Einmündungskammer im Abstand zum Boden des Tankers des Leichtflüssigkeitsabscheiders sowie seitlich angeordnetem Kontrollschacht;

Figur 2 eine Querschnittsansicht der Vorrichtung nach Figur 1 oberhalb der Leitungen für den Abfluß der Schwerflüssigkeit und den Auslauf der Leichtflüssigkeit;

Figur 3 u.

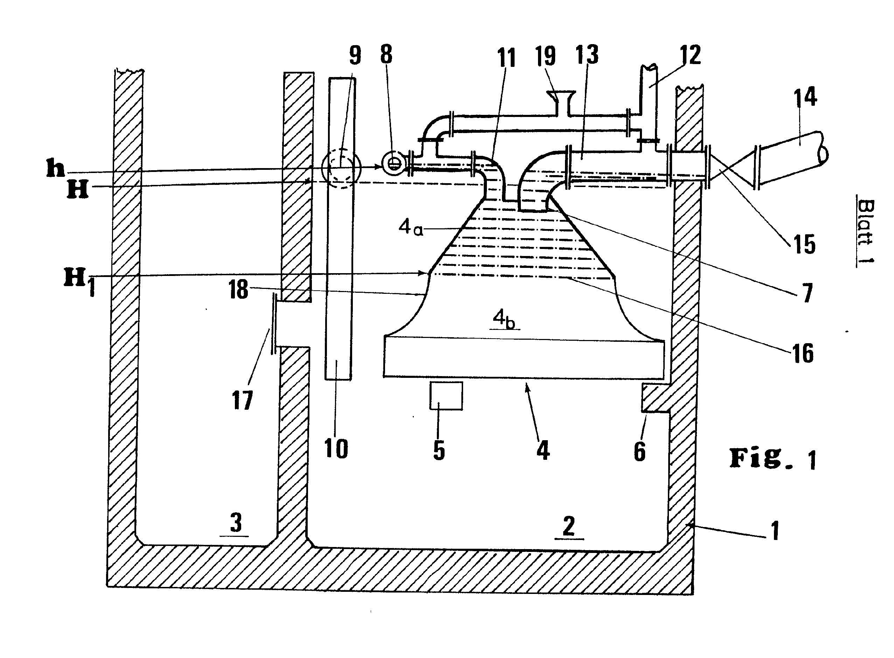

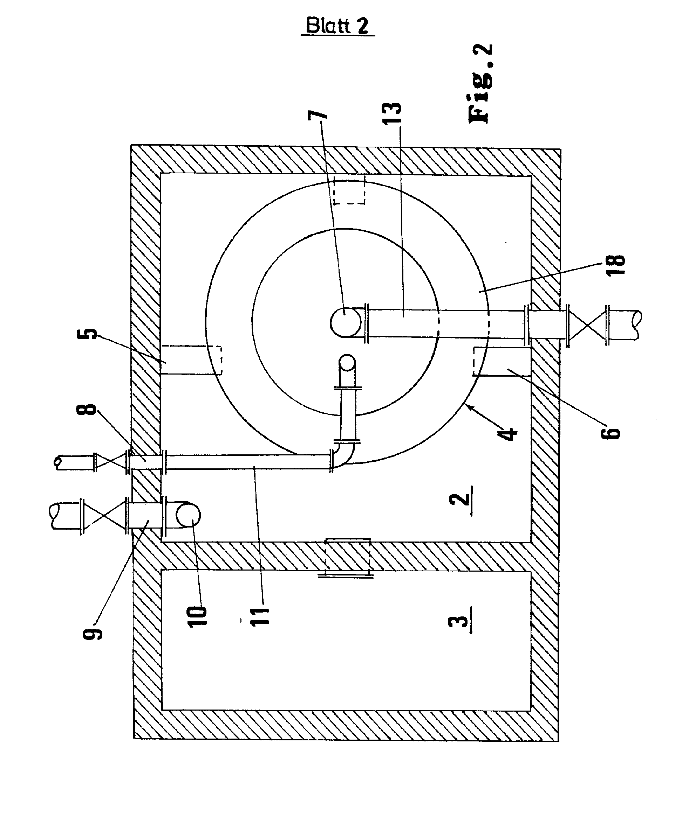

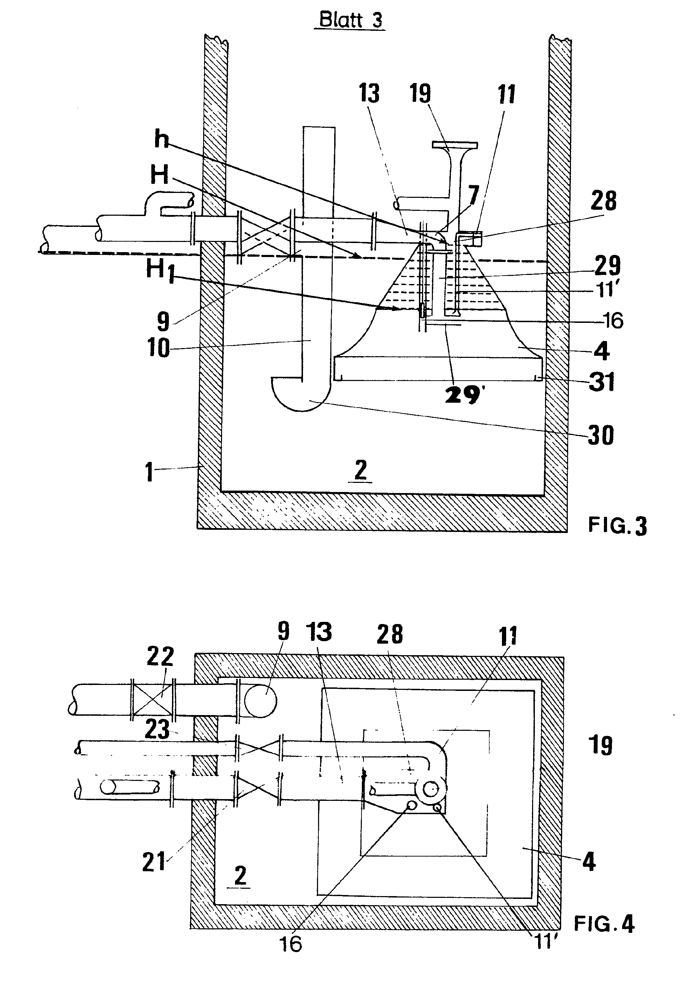

Figur 4 einen Leichtflüssigkeitsabscheider ähnlich wie die Ausführungsform gemäß Figur 1 und 2 mit Schwimmer zur Anzeige der Grenzschicht zwischen Leicht- und Schwerflüssigkeit und Sicherheitsablauf in der glockenförmigen Abscheidekammer zur Anzeige einer sich zu tief ausbildenden Leichtflüssigkeitsschicht sowie mit einer Ölsperre an dem Tauchrohr zum Abfluß der Schwerflüssigkeit und einem abgeänderten Zuleitungsrohr zur Beruhigung der Strömung des zugeleiteten Flüssigkeitsgemisches;

Figur 5 u.

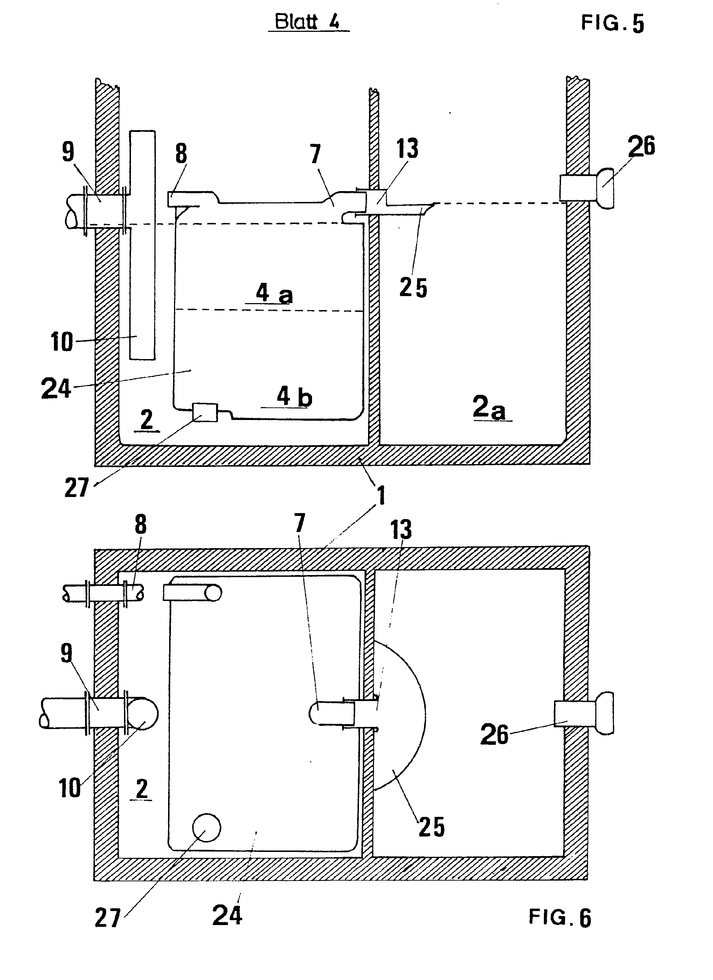

Figur 6 einen Leichtflüssigkeitsabscheider mit vorgeschaltetem Schlammfangtank, wobei in dem Leichtflüssigkeitsabscheider als Abscheidekammer ein auswechselbarer Kanister Verwendung findet, welcher an seiner Unterseite bis auf eine verschließbare Öffnung geschlossen ist;

Figur 7 u.

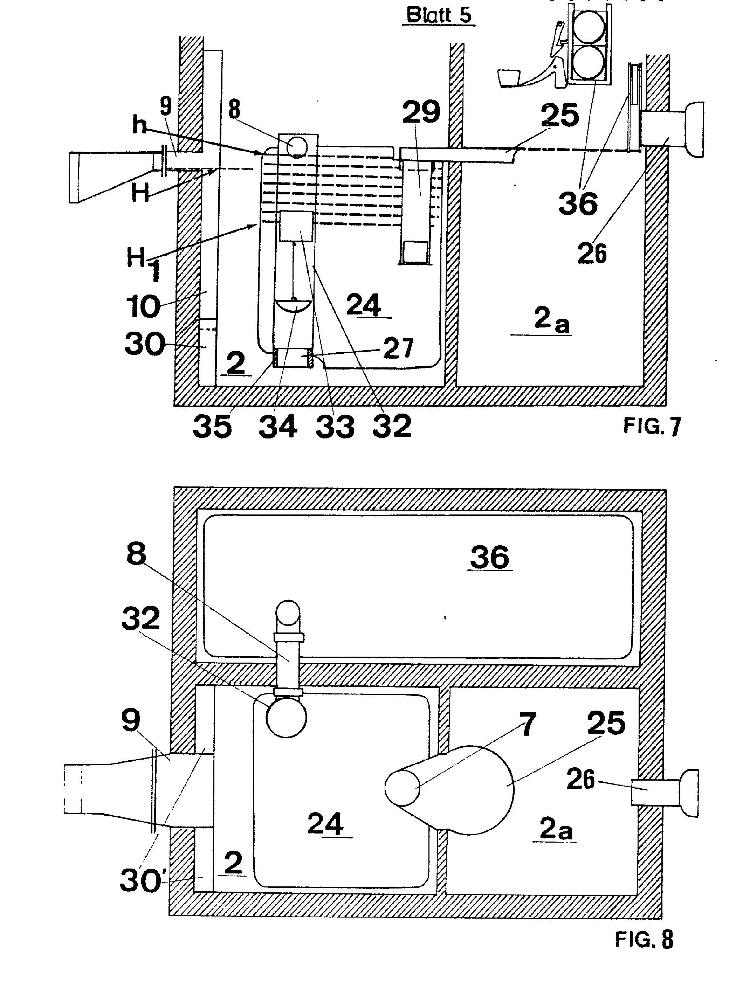

Figur 8 einen Leichtflüssigkeitsabscheider ähnlich wie nach Figur 5 und 6 mit einem separaten Schlammfangtank und einer Einmündungsglocke in Form eines Kanisters, wobei der Kanister grundsätzlich zum Entleeren des Öls nicht auswechselbar ist, sondern einen seitlichen zusätzlichen Reservekanister mit einem Leichtflüssigkeitsüberlauf dorthin aufweist, wobei in dem Reservekanister in dem oberen Bereich der Abscheidekammer zusätzlich zufließende Leichtflüssigkeit gesammelt und schließlich zu Altölbeseitigung weggebracht wird, sowie mit einer Schließvorrichtung für den Auslauf der durch einen ersten Kanister gebildeten Abscheidekammer und einen Flachkeilschieber für den Zulauf des Flüssigkeitsgemisches im Schlammfangtank, wobei der Flachkeilschieber über einen Sicherheitsablauf in einem Zuführungsrohr des ersten Kanisters betätigt wird;

Figur 9 u.
Figur 1o einen Längs- und einen Querschnitt eines Drei-Stufen-Abscheiders mit seitlich der als Schacht ausgebildeten Abscheidekammer angelegtem Sammelraum für Leichtflüssigkeit in Form eines Längsschachtes mit Überfluß aus der ersten Abscheidekammer und dem nachfolgenden Abscheideraum, und lediglich in dem Speicherraum gegenüber den übrigen Bereichen des Leichtflüssigkeitsabscheiders abgesenktem Schwerflüssigkeitsniveau zur Ausbildung einer höheren Leichtflüssigkeitssäule;

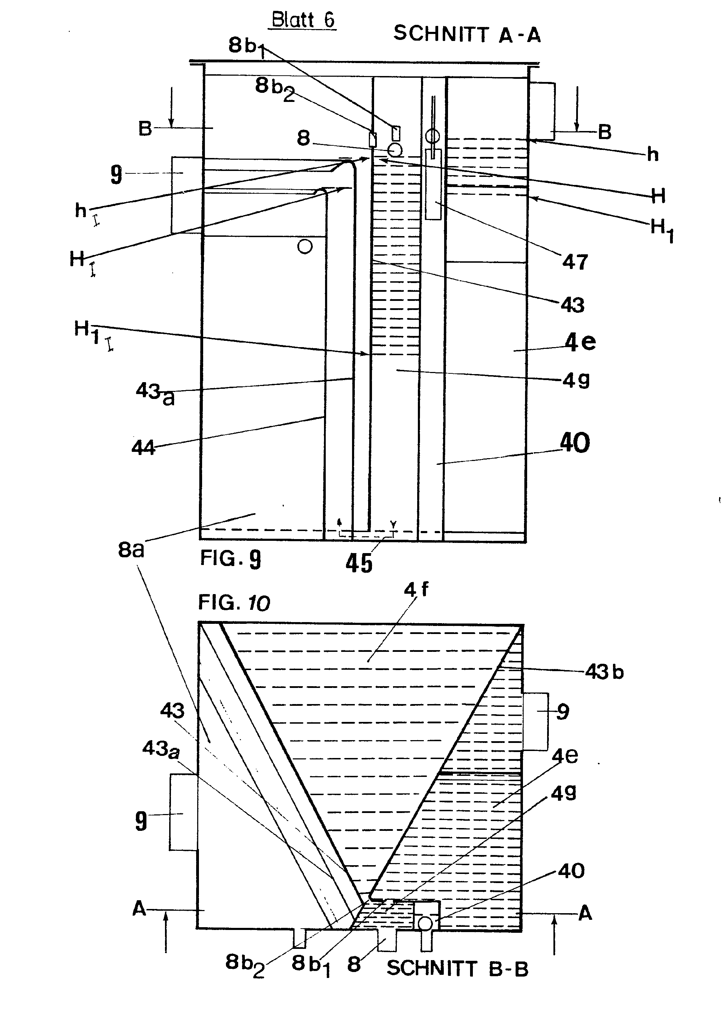

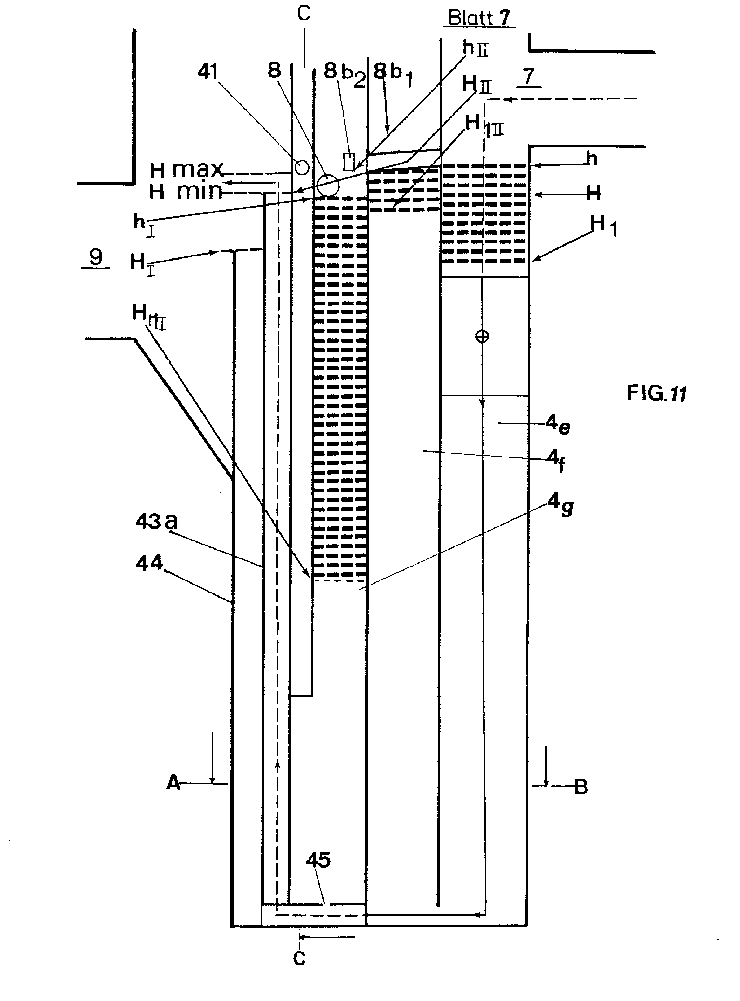

Figur 11 eine schematische Ansicht der Anlage des Speicherraumes für Leichtflüssigkeit bei dem Abscheider gemäß Figur 9 und 1o unter Darstellung der verschiedenen unterschiedlich abgesenkten Schwer- und Leichtflüssigkeitsniveaus sowie der sich bei plötzlich erhöhten Zufluß bzw. im Normalzustand ausbildenden maximalen und minimalen Flüssigkeitsniveaus, sowie des seitlich der Speicherkammer für die Leichtflüssigkeit angelegten Schachtes für den Sicherheitsablauf der ersten Abscheidekammer;

Figur 12 u.

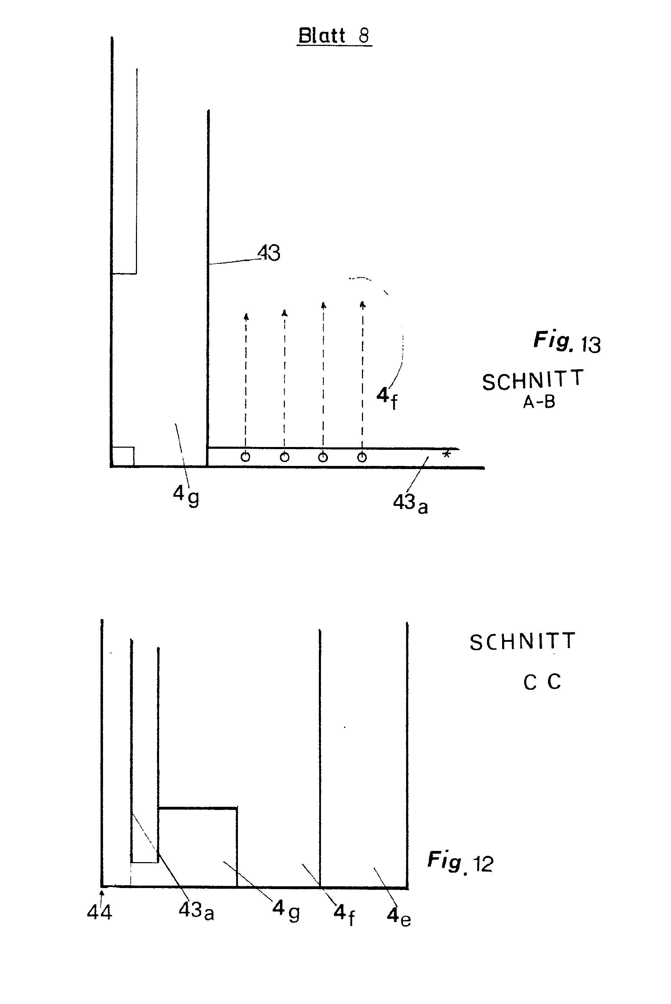

Figur 13 einen Querschnitt gemäß der Schnittlinie AB nach Figur 11 unter Darstellung der Schichten des Vor- und Nachabschneiders und deren Überlauf sowie deren seitliche Speicherkammer mit dessen separaten, tiefer liegenden Überlauf; sowie einen Längsschnitt in einer senkrechten Ebene zur Schnittebene der Figur 11 unter Darstellung der seitlichen Speicherkammer und dem rechts sich anschließenden Nachabscheider mit Trennwand 43 und hinter dieser angedeuteten Strömung zum Überlauf;

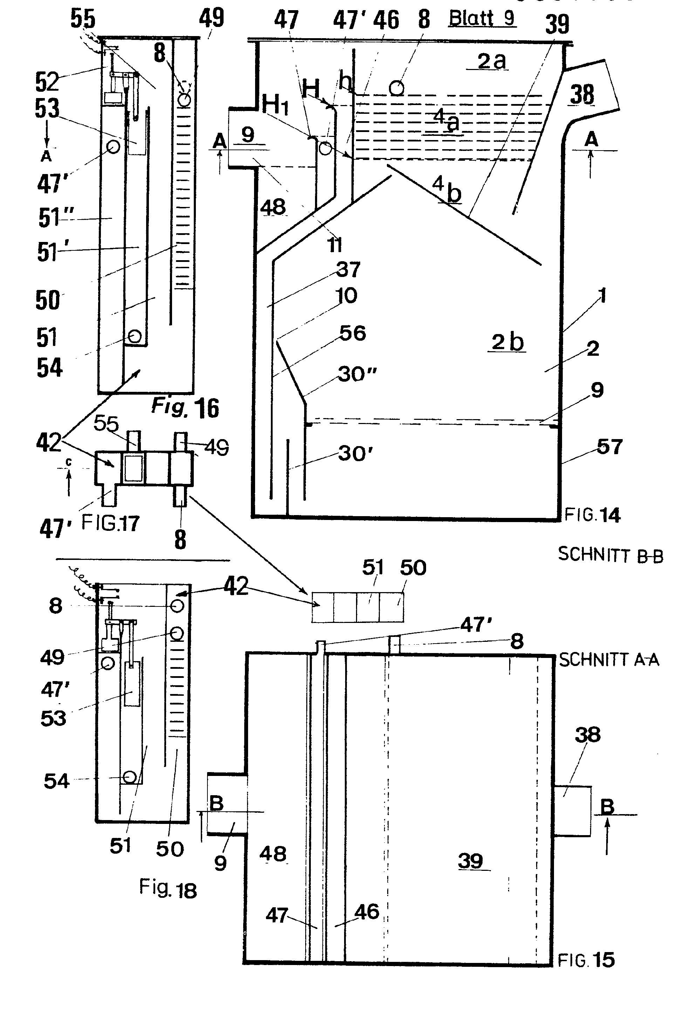

Figur 14 einen Längsschnitt durch einen Leichtflüssigkeitsabscheider, welchem ggfls. ein Schlammfangtank vorgeschaltet ist, mit einer sich seitlich nach unten öffnenden Abscheidekammer und einem unterhalb eines Prallbleches bzw. Verschlußbleches der Abscheidekammer angelegten im wesentlichen strömungsfreien Abscheideraum;

Figur 15 eine Schnittansicht des Leichtflüssigkeitsabscheiders nach Figur 14 in Draufsicht auf die Abscheidekammer, deren Zulauf für das zu klärende Flüssigkeitsgemisch und den Leitungen bzw. Schächten des Auslaufes der Leicht- und Schwerflüssigkeit;

Figur 16 u. Figur 17 einen Längs- und einen Querschnitt für eine an dem Ölauslauf der Abscheidekammer angeordneten Sicherheitsbehälter mit elektrischer Alarmanlage, welche einen unzulässigen Anstieg der Leichtflüssigkeitsschicht anzeigt;

Figur 18 einen weiteren kleineren Sicherheitsbehälter;

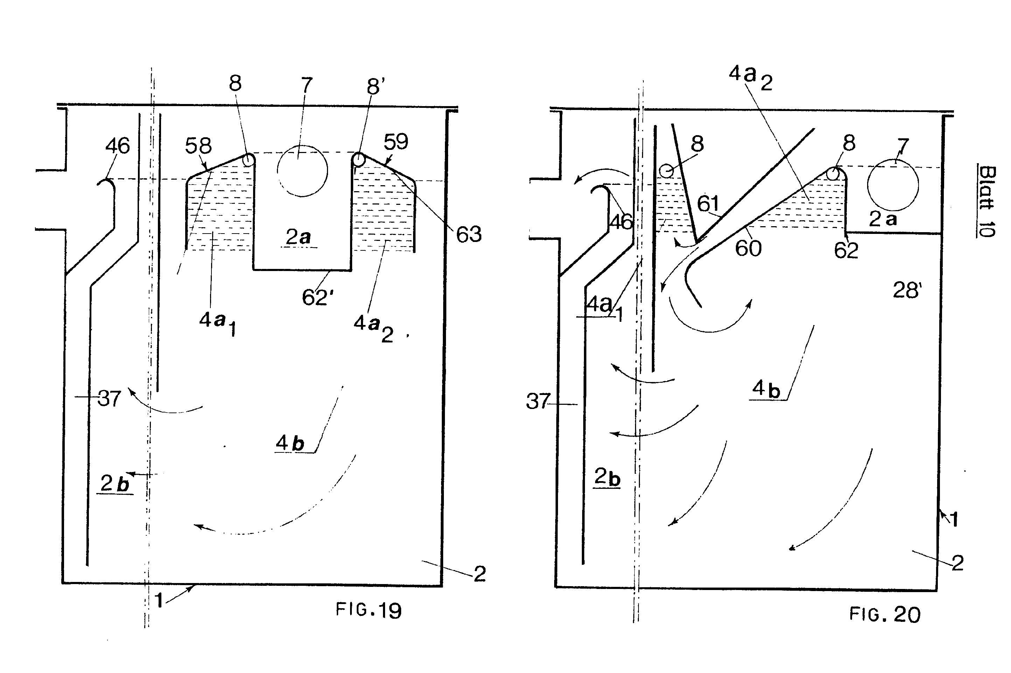

Figur 19 einen Leichtflüssigkeitsabscheider unter Darstellung eines im oberen Bereich der Abscheidekammer angeordneten Einlaufbeckens mit doppelseitiger Rinnenschleuse für den Überlauf des in das Einlaufbecken eingeleiteten Flüssigkeitsgemisches;

Figur 2o einen Leichtflüssigkeitsabscheider mit seitlich am Tank der Trennvorrichtung im oberen Bereich der Abscheidekammer angeordneten Einlaufbecken, welches lediglich zur einen Seite eine Rinnenschleuse zum Überlauf des Flüssigkeitsgemisches aufweist und unterhalb der Rinnenschleuse einen von der eigentlichen Strömung in der Trennvorrichtung abgewandten Beruhigungsraum zum Absetzen von Leichtflüssigkeit und mindestens einem weiteren Abscheideraum;

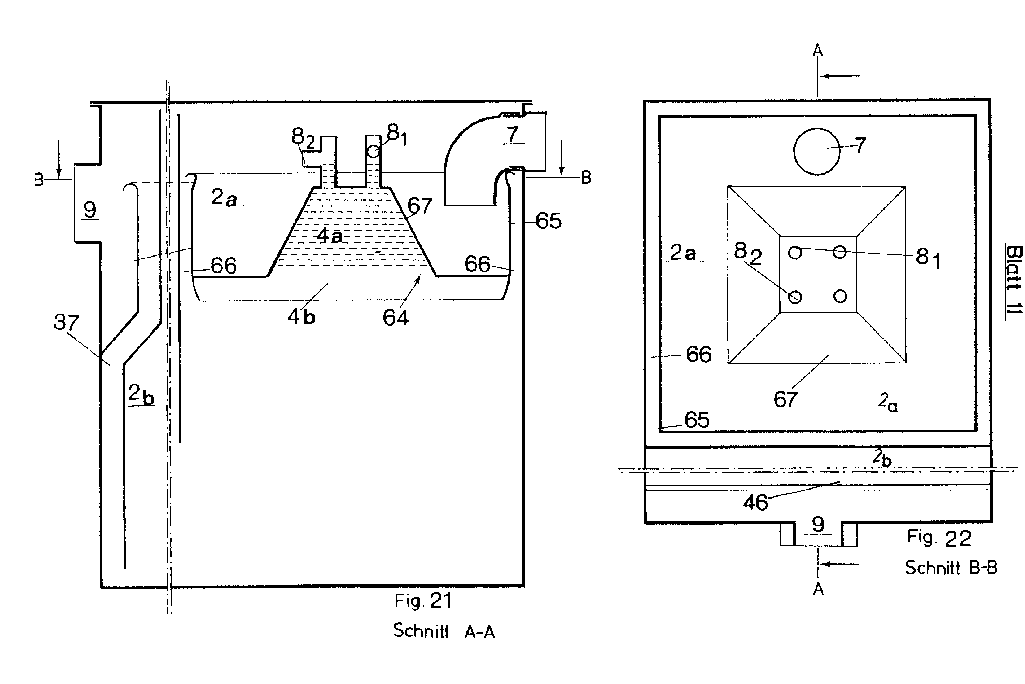

Figur 21 einen Leichtflüssigkeitsabscheider mit in der Abscheidekammer im oberen Bereich eingetauchten Behälter, welcher in seinem oberen Teil ein Einlaufbecken bildet und in seinem mittleren unteren Teil den oberen Bereich der Abscheidekammer, in welchem die Leichtflüssigkeit ansteht;

Figur 22 eine Querschnittsansicht gemäß dem Schnitt BB durch den Abscheider gemäß Figur 21;

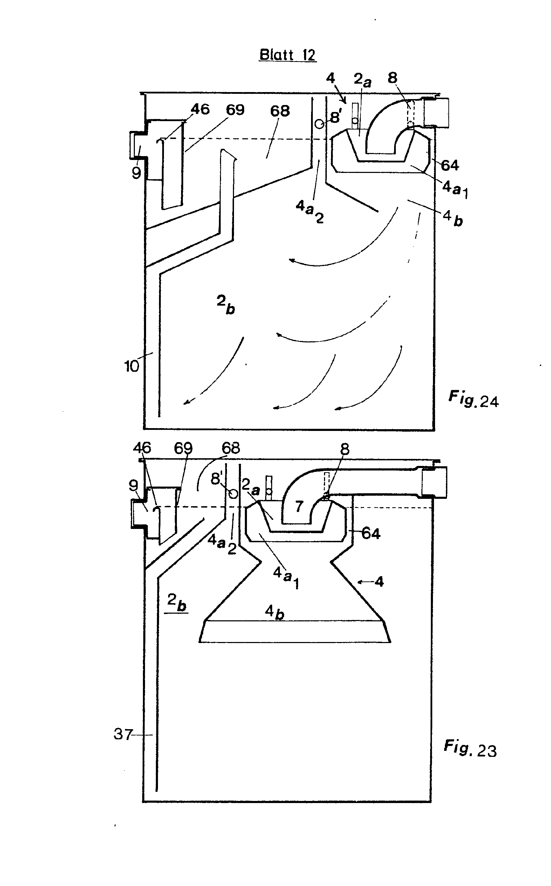

Figur 23 einen Leichtflüssigkeitsabscheider mit einer glockenförmigen Abscheidekammer, in dessen oberen Bereich ein Behälter eingetaucht ist, welcher ein Einlaufbecken von oben bildet und von unten zumindest einen Teil des Sammelraums für die Leichtflüssigkeit;

Figur 24 einen weiteren Leichtlflüssigkeitsabscheider mit sich lediglich seitlich öffnender Abscheidekammer, in welcher ein Behälter angeordnet ist, der ein Einlaufbecken von oben bildet und von unten einen Sammelraum für Leichtflüssigkeit, sowie einen Abscheideraum im seitlichen und unteren Bereich des Leichtflüssigkeitsabscheiders, unterhalb dessen die Schwerflüssigkeitsströmung mit Restanteilen von spezifisch schweren Leichtflüssigkeitsbestandteilen zu einem Steigrohr führt, welches in einen Restabscheider für Leichtflüssigkeit führt und dann über ein Steigrohr mit Geruchsverschluß zum Ablauf der Schwerflüssigkeit führt;

Figur 25 u.

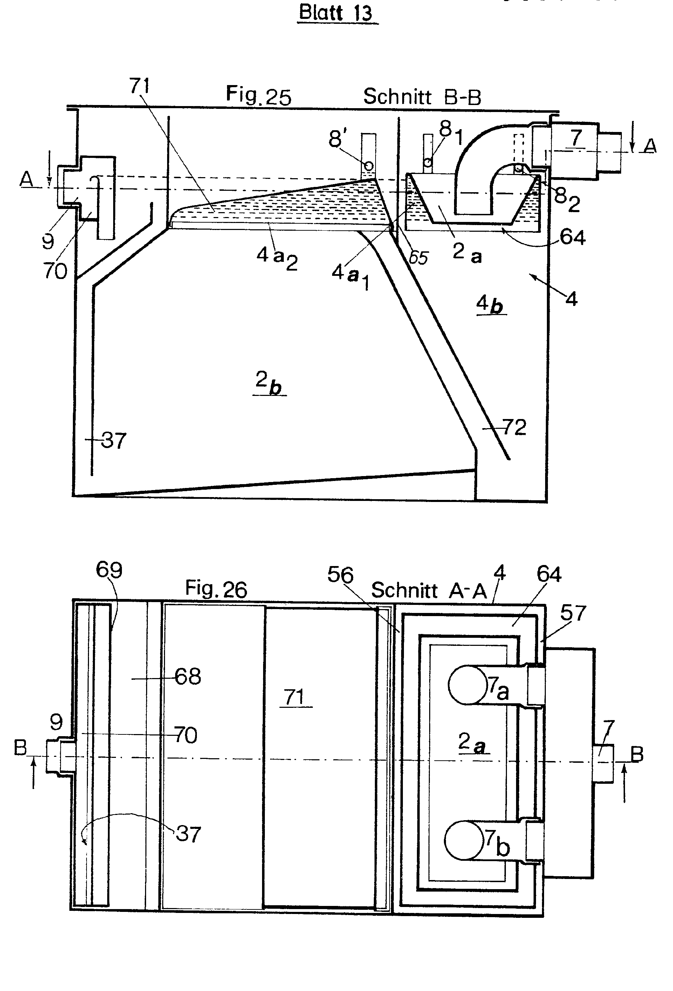

Figur 26 einen weiteren Leichtflüssigkeitsabscheider, welcher seitlich eine Abscheidekammer mit im oberen Bereich befindlichen Behälter unter Bildung eines Einlaufbeckens für das Flüssigkeitsgemisch aufweist und nach links einen über eine größere Länge des Tankes angelegter Abscheideraum, wobei die aus der Abscheidekammer austretende Flüssigkeit nach oben zu der im Abscheideraum im oberen Bereich befindlichen Leichtflüssigkeitsschicht geführt wird und von dort nach unten zum Steigschacht des Ablaufes für die Schwerflüssigkeit;

Die in den Figuren 1 bis 4 dargestellten Leichflüssigkeitsabscheider sind insbesondere auch für die unmittelbare Einleitung schlammhaltiger Gemische von Schwer- und Leichtflüssigkeiten geeignet und werden in der Weise wie die übrigen Abscheider zum Trennen einer Leichtflüssigkeit wie Öl oder Benzin von einer Schwerflüssigkeit wie Wasser verwendet.

Gegenüber bekannten Leichtflüssigkeitsabscheidern, die je nach der Anfallmenge des Abwassergemisches mehrere Abscheiderbehälter, zumindest aber einen Schlammfangtank großen Fassungsvermögens benötigen, wird bei den dargestellten Leichtflüssigkeitabscheidern aufgrund des selbsttätigen kontinuierlichen Abflusses der Leichtflüssigkeit lediglich ein Tank der Trennvorrichtung mit relativ geringem Fassungsvermögen benötigt. Insbesondere sind dabei Wartungsarbeiten, wie Entnahme des anfallenden Schlammes, nur nach einem längeren Zeitraum zu wiederholen, wobei der Schlamm aus dem Tankbehälter ohne üblicherweise auf der Schwerflüssigkeit aufschwimmende Leichtflüssigkeit (Öl) entnehmbar ist, da evtl. aufschwimmende Leichtflüssigkeit in dem Tank mittels der erfindungsgemäßen Trennvorrichtung leicht abführbar ist.

Der Figur 1 ist zu entnehmen, daß die erfindungsgemäße Tennvorrichtung 1 für Leichtflüssigkeiten von Schwerflüssigkeiten aus einem Schlammfangtank 2 mit einer etwa in der Mitte des Tankes auf Stützen 5,6 mittig in diesem angeordneten Abscheidekammer in Form einer Einmündungsglocke 4 besteht, wobei in der Wandung des Tankes 2 bzw. der Einmündungsglocke 4 selbst ein Einlauf 7 für das Flüssigkeitsgemisch, ein Auslauf 8 für das Öl oder Benzin (Leichtflüssigkeit) und ein Ablauf 9 für das von dem leichteren Öl oder Benzin zu trennende Wasser (Schwerflüssigkeit) vorgesehen ist.

Der über den Zulauf 7 in die Einmündungsglocke 4 bzw. in den Tank 2 mit dem Abwassergemisch zufließende Wasseranteil wird dabei nach Ausbildung einer Wasserhöhe bzw. eines Wasserspiegels bis zur Stelle H kontinuierlich durch den Ablauf 9, bzw. das an ihm angelegte Tauch- und Entlüftungsrohr 1o abgeführt. Das Tauchrohr 1o ist dabei etwa T-förmig und an seinem oberen und unteren Ende jeweils offen.

Das obere Ende reicht dabei zur Entlüftung bis weit in den oberen Bereich des Schlammfangtanks. Die dritte Öffnung bzw. der mittlere Anschlußstützen des Rohres 1o führt dagegen in den Ablauf 9.

Der Auslauf 8 für das in der Einmündungsglocke 4 sich abscheidende Öl ist bzgl. des Ablaufes 9 in der Wandung des Tankes 2 etwas höher angeordnet. Der Auslauf 8 ist dabei über einen Ablaufstutzen 11 mit der Einmündungsglocke 4 in deren obersten Bereich an der höchsten Stelle verbunden, so daß über den Einlauf 7 in den oberen Bereich der Glocke eintretende Ölanteile in dieser zum Ablaufstutzen 11 durch allmähliches Füllen des oberen Bereichs der Glocke mit Leichtflüssigkeit aufschwimmen und über den Stutzen zum Auslauf 8 und damit zum Sammeln in einen Altöltank fließen.

Damit sich im Ablaufstutzen 11 das Öl um die Höhe h gegenüber dem außerhalb der Glocke befindlichen Wasserniveau H hebt, hat dabei der Ablaufstutzen 11 überhalb des äußeren Wasserspiegels eine Höhe h, wo er in den Auslauf für die Leichtflüssigkeit zu einem Sammeltank für Altöl mündet.

Aufgrund der somit vorgegebenen Höhe h, um die die Leichtflüssigkeit innerhalb des Ablaufstutzens 11 ansteigen muß, um zum Abfluß zu kommen, bildet sich unterhalb des äußeren Wasserniveaus eine Schichtdecke des Öls in der Glocke aus, die bis in die Tiefe $H_1$ reicht. Dieses Niveau der eintauchenden Ölschicht ergibt sich aus dem unterschiedlichen spezifischen Gewicht zwischen Öl und Wasser und der sich zwangsweise oberhalb des Wasserspiegels im Ablaufstutzen 11 bis zur Höhe h ausbildenden Leichtflüssigkeitssäule.

Der Auslauf 8 ist dabei desweiteren über ein zur äußeren Atmophäre führendes Rohr 12 entlüftet. Dieses Rohr ist dabei gleichzeitig mit dem Ablaufstutzen 11 und der Zuführungsleitung 13 zwischen Einlauf 7 und Einlaufrohr 14 für das Abwassergemisch bzw. dessen Absperrventil 15 verbunden. Auf diese Weise werden gleichzeitig Einlauf des Abwassergemisches und Auslauf für das Öl entlüftet.

Die Grenzschicht zwischen Öl und Wasser auf dem Niveau $H_1$ etwa in der Mitte der Einmündungsglocke muß dabei kontrolliert werden, um sicherzustellen, daß eine Verdrängung des im unteren Bereich der Glocke befindlichen Wassers durch größere Mengen nachfließenden Öls und ein Austritt größerer Mengen von Öl aus der Einmündungsglocke nicht eintreten kann. Zu diesem Zweck ist gemäß den Figuren 3 und 4 in der Einmündungsglocke ein Schwimmer 16 vorgesehen, dessen Stand von einem Kontrollschacht 3 neben dem Tank 2 aus beobachtet wird. Es sind natürlich auch Fernanzeigen nach außerhalb der Trennvorrichtung möglich. Der Schwimmer wird dabei mit einer derartigen Steuerung verbunden, daß bei Zuströmung zu großer Abwassermengen über den Zulauf 7 das Absperrventil 15 des Einlaufrohres 14 geschlossen wird. Wird dagegen das Einlaufrohr 14 in einem verringerten Durchmesser gewählt oder das Absperrventil 15 auf einen solchen Öffnungsquerschnitt eingestellt, daß über den Auslauf 8 und über den Ablauf 9 die maximal zufließenden Flüssigkeitsmengen auf jeden Fall abfließen können, so ist die Anordnung eines Schwimmers mit besonderer Überwachungseinrichtung überflüssig.

Wesentlich für die Funktion der Abscheidung in der Einmündungsglocke 4 ist dabei, daß die Grenzschicht zwischen Leicht- und Schwerflüssigkeit im wesentlichen in ihrer Anordnung konstant bleibt, wobei sich eine relativ ruhige Strömung des zufließenden Abwassergemisches ausbildet und somit die Fallgeschwindigkeit,mit der die Flüssigkeit in der Glocke absinkt,zumindest im Bereich der Auftriebsgeschwindigkeit der Leichtflüssigkeit ist.

Evtl. mitgeführte schwere Bestandteile der Leichtflüssigkeit, welche mit der Schwerflüssigkeit aus der Einmündungsglocke austreten, steigen dann in dem Raum zwischen Einmündungsglocke und dem Tauchrohr aufgrund der dort fehlenden Gegenströmung auf und können dann beispielsweise mittels eines vor dem Ölablauf 8 mündenden Überlauftrichters 19 nach Anheben des Wasserspiegels im Tank 2 abgeführt werden.

Vor Inbetriebnahme ist die Trennvorrichtung 1 bzw. der Tank 2 mit Wasser bis zum Ablauf 9 zu füllen. Der Wasserstand befindet sich dabei in der Einmündungsglocke 4 ebenfalls auf der Höhe H. Beim Einfließen von Schlamm und Leichtflüssigkeit bzw. ölhaltigem Abwasser trennen sich nun innerhalb der Glocke Öl und Wasser, wobei das Öl eine größere Schicht_dicke im oberen Bereich 4 a der Einmündungsglocke bildet und die Schwerflüssigkeit unter das Niveau $H_1$ in den unteren Bereich 4 b der Einmündungsglocke absinkt. Mitgeführter Schlamm wird dabei aus der in ihrer vollen Querschnittsbreite sich öffnenden Einmündungsglocke ausgeführt und kommt auf den Boden des Tankes 2 zu liegen. Das Öl schichtet sich so lange im oberen Bereich 2 a der Einmündungsglocke auf, bis dies das Niveau h durch Anstieg in dem im oberen Bereich der Glocke mündenden Ablaufstutzen 11 erreicht hat.

Wenn das spezifische Gewicht von Öl beispielsweise 1o bis 15% leichter als das des Wassers ist, steigt das Öl entsprechend über die äußere Höhe H des äußeren Wasserspiegels hinaus, wobei es sich gleichzeitig nach unten in die Einmündungsglocke bis zur Höhe $H_1$ ausbreitet. In dem dargestellten Fall des Abscheiders nach den Figuren 1 und 2, wo der Zulauf 7 ein geringes Maß tiefer als der Ablaufstutzen 11 unterhalb der Kuppel der Glocke 4 einmündet, und zwar innerhalb des Bereichs der sich ausbildenden Ölschicht zwischen $H_1$ und H, ist dabei der Öffnungsquerschnitt des Zulaufes 7 bzw. dessen Zuführungsleitung 13 bei der Berechnung des Anstiegs der Leichtflüssigkeitsschicht zu berücksichtigen. Vorteilhafterweise ist daher zur Ermöglichung eines großen Höhenunterschiedes h, der sich schon mit einer relativ kleinen Leichtflüssigkeitsmenge schon nach kurzer Zeit einstellt, und damit zur Erreichung einer sicheren Trennung X der Zulauf des Abwassers über ein bis unterhalb des Niveaus $H_1$ geführtes Tauchrohr erfolgt, unter Führung des im Tauchrohr zugeführten Abwassergemisches durch die gesamte Ölschicht bis in den unteren Bereich 4 a der Glocke.

X der Glockenquerschnitt im oberen Bereich verengt, wobei Eine derartige Lösung ist strömungstechnisch günstig, da eine Vermischung von Wasser mit der schon oberhalb des Niveaus $H_1$ befindlichen Ölschicht vermieden wird. Andererseits kann bei Anlage des Einlaufes 7 in der Ausführungsform gemäß Figur 1 das Zuführungsrohr 13 auch in einem Bereich zwischen dem Niveau H des äußeren Wasserspiegels und dem Auslauf des Öls derart geführt sein, daß in der Zuführungsleitung 13 kein Öl ansteht.Durch eine Flüssigkeitsschicht vor dem Zulauf 7 ist es dabei möglich, die Strömung des Abwassergemisches zu verlangsamen und damit dessen Trennung zu begünstigen.

Da der Zulauf 7 zentral in der Glocke angeordnet ist und die Glocke in der Breite des Tankes 2 mittig im geeigneten Abstand vom Boden des Tankes angeordnet ist, kann dabei der Schlamm sich gleichmäßig über den Boden verteilen und dort über einen längeren Zeitraum angesammelt werden, bis er über den Wasserspiegel abgesaugt und dann ohne den sonst anfallenden Beimengungen von Öl und damit ohne Verbrennung deponiert werden kann.

Zu Verlangsamung der Strömung ist desweiteren neben der trichterartig sich nach unten öffnenden Einmündungsglocke auch noch die Anlage eines nach außen gewölbten Düsenkörpers 18 am unteren Bereich der Einmündungsglocke 4 von Bedeutung. Der Düsenkörper 18 ist dabei rund oder rechteckig entsprechend der Querschnittsfläche der Einmündungsglocke.

Die Grundfläche des die Einmündungsglocke 4 aufnehmenden Tankes ist etwa 1oo x 1oo cm, wobei der äußere bis über die GLocke reichende Wasserspiegel eine Höhe von ebenfalls etwa 1 m erreicht. Der Öffnungsquerschnitt der Glocke im mittleren Bereich, also im Bereich der Grenzschicht $H_1$ beträgt dabei etwa 5o cm, wobei im oberen Bereich der Glocke eine Leichtflüssigkeitsmenge von etwa $cm^3$ aufgenommen und im unteren Bereich der Glocke eine Schwerflüssigkeitsmenge von $cm^3$ Aufnahme findet. Die in der Einmündungsglocke sich ausbildende Strömung von zufließender bzw. abfließender Flüssigkeit bzw. deren Fallgeschwindigkeit ist dabei derart verringert, daß sie im Bereich der Auftriebsgeschwindigkeit von leichtem Öl, also unter o,5cm/sec. liegt. Wesentlich neben der Abmessung der Einmündungsglocke und der Menge der außerhalb der Glocke befindlichen Schwerflüssigkeit ist dabei die zugelassene maximale Zuflußmenge bzw. die Öffnungsweite des Zuflusses 7. Bei der erwähnten Abmessung des Leichtflüssigkeitsabstandes hat sich dabei bei einer Zuflußmenge von 2 Liter noch eine Abscheidung der Leichtflüssigkeit in der Schwerflüssigkeit bis auf 99,9% ergeben (spezifische Dichte des Öls o,852 $g/cm^3$, Temperatur 1o$^0$ C, nach 5 Minuten).

Bei der Trennvorrichtung gemäß Figur 3 und 4, welche im Prinzip ähnlich wie die Trennvorrichtung nach Figur 1 und 2 aufgebaut ist, ist der Überlauftrichter 19 unmittelbar am Ablaufstutzen 11. welcher seitlich aus dem oberen Bereich der Einmündungsglocke geführt ist, angeschlossen. Die Zuführungsleitung 13 für das Flüssigkeitsgemisch ist dabei mittig in die Glocke geführt und zwar über einen Anschlußstutzen 29 mit unterem PralltelIer bis unterhalb die Grenzschicht $H_1$. Die Abflachung der Zuführungsleitung 13 von einem runden Querschnitt auf einen flachen länglichen Querschnitt führt dabei zu einer Beruhigung der Strömung des zufließenden Flüssigkeitsgemisches, wobei ebenfalls eine derartige Beruhigung durch den Pralltelier am Ende des Rohrstücks 29 erreicht wird. Rechts neben dem Rohrstück 29 ist desweiteren die Rohrleitung eines unterhalb der Grenzschicht $H_1$ mündenden Sicherheitsablaufes erkennbar, über den eine unzulässig sich über das Niveau $H_1$ nach unten ausbreitende Leichtflüssigkeitsschicht feststellbar ist. Um insbesondere bei Wartungsarbeiten und Ablassen des Wassers im Tank 2 ein Abfließen von Öl an der Innenfläche der Einmündungsglocke zu verhindern, weist diese am unteren Rand eine sich über den ganzen Umfang der Glocke erstreckendes Restölauffangrinne 31 auf. Desweiteren erkennt man in der Glocke eine Führung für einen Schwimmer 16, welcher die Lage der Grenzschicht $H_1$ innerhalb der Glocke anzeigt.

Im Gegensatz zu der Trennvorrichtung gemäß den Figuren 1 und 2 weist das Tauchrohr 1o in der Trennvorrichtung gemäß den Figuren 3 und 4 an der Einmündung noch eine in größerem Abstand von der Einmündungsglocke befindliche Ölsperre 3o am Tauchrohr auf.

Bei den folgenden Leichtflüssigkeitsabscheidern nach den Figuren 5 bis 26 sind entsprechende Teile jeweils mit denselben Bezugsziffern insbesondere wie in den Figuren 1 bis 4 versehen.

Bei der Ausführungsform gemäß den Figuren 5 und 6 ist dabei dem Leichtflüssigkeitsabscheider 1 ein Vorabscheider bzw. ein Schlammfangtank 2 a vorgeschaltet, welchem über einen Zulauf 26 ein Gemisch aus Leicht- Schwerflüssigkeit und Schlamm zuläuft. Das auf der Oberfläche der Flüssigkeit im Vorabscheider 2 a sich absetzende Flüssigkeitsgemisch läuft über eine halbkreisförmig an der Oberfläche der Flüssigkeit des Vorabscheiders eintauchende Einlaufzunge 25 ein, wobei diese Einlaufzunge eine nach oben abgebogene Randabkantung aufweist, so daß die Einlaufzunge eine stetige, sich über die ganze Flüssigkeitsoberfläche im Vorabscheider ausbildende Strömung erzeugt, so daß vornehmlich von dort Leichtflüssigkeit abgesaugt wird. Die Abscheidekammer 4 ist dabei wie in der Ausführungsform des Leichtflüssigkeitsabscheiders nach den Figuren 7 und 8 in Form eines Kanisters ausgebildet, welcher unten bis auf eine Öffnung 27 geschlossen ist. Der Kanister 24 ist dabei oben mit einem Auslauf 8 versehen, über den Öl in einen Sammelkanister 36 gemäß der Ausführungsform nach den Figuren 7 und 8 führbar ist, wobei entweder der Kanister 24 oder der Kanister 36 das abzuscheidende Öl aufnimmt und dann zum Entleeren fortzubringen ist. In dem Kanister 24 bildet sich dabei wie in der Einmündungsglocke 4 ein oberer Bereich 4 a aus, in dem sich Leichtflüssigkeit ansammelt und ein unterer Bereich 4 b, in welchem Schwerflüssigkeit also Wasser sich befindet. Um ein unzulässiges Absinken der Grenzschicht zwischen Wasser und Öl zu verhindern, muß dabei rechtzeitig der Auslauf 27 im Boden des Kanisters geschlossen werden. Dazu ist gemäß der Ausführungsform nach Figur 7 und 8 in einer Führung 32, welche bis in den oberen Bereich der Leichtflüssigkeitsschicht sich erstreckt, ein Grenzschichtschwimmer 33 vorgesehen, welcher mit einem Sperrmechanismus 34 für den Auslauf 27 in Verbindung steht, wobei der Sperrmechanismus 34 mit einem Dichtungsring 35 im Auslauf bei Erreichung der maximalen zulässigen Leichtflüssigkeitsschicht in Eingriff gelangt.

Gleichzeitig können mit dem Schwimmer 33 Sperrvorrichtungen 36 in Form eines Flachkeilschiebers am Zulauf 26 des Vorabscheiders 2 a vorgesehen sein.

In den Figuren 9 und 1o ist ein Leichtflüssigkeitsabscheider

0037855

mit drei aufeinanderfolgenden Abscheidestufen dargestellt, nämlich eine Abscheidekammer 4 e, die über eine zu unterfließende Sperre in den Abscheideraum 4 f mit der dortigen Schwerflüssigkeit in Verbindung steht, wo ebenfalls auf schwimmende Leichtflüssigkeit sich auf dem Schwerflüssigkeitsspiegel absetzt, /ein Abscheideraum 4 f und eine am Rand der Abscheidekammer 4 e bzw. des Abscheideraumes 4 f innerhalb eines Längsschachtes angelegte Speicherkammer für Leichtflüssigkeit 4 g, in die jeweils ein Abfluß von der Kammer 4 e bzw. dem Raum 4 f für Leichtflüssigkeit 8 $b_1$ bzw. 8 $b_2$ mündet.

Die zu unterfließende Wandung 43 b zwischen der Kammer 4 e und dem Raum 4 f ist dabei als bloße unten offene Wandung ausgebildet, so daß sich im Raum 4 e eine Leichtflüssigkeitsschicht ausbilden kann, welche mächtiger ist als die in dem Raum 4f. Da die Wandung 43 b somit nicht in Form einer doppelwandigen Schleuse ausgebildet ist, deren eine Wandung höher als die andere ist, liegen in der Kammer 4 e und dem Raum 4 f prinzipiell gleiche Flüssigkeitsniveaus insbesondere Schwerflüssigkeitsniveaus im Normalzustand der Trennvorrichtung vor. Insofern trägt die Wandung 43 b nicht dazu bei, daß wie bei der Anlage einer Schleusenwandung in der Abscheidekammer 4 e sich ein höherer Wasserspiegel ausbildet als in dem anschließenden Abscheideraum 4 f und insofern bei im Betrieb plötzlich anfallenden erhöhten Durchflußmengen Niveauschwankungen der Leicht- und Schwerflüssigkeit ausgeglichen würden.

Ein derartiger Ausgleich findet aber in dem Leichtflüssigkeitsspeicher 4 g statt, dessen Schwerflüssigkeitsniveau nicht durch die Höhenanordnung des Überlaufes 43 a der Abscheidekammer 4 e und des Abscheideraumes 4 f bestimmt wird sondern durch den tiefer liegenden Überlauf 44. Aufgrund des somit im Speicher 4 g tieferen Wasserniveaus kann sich im Speicher eine höhere Ölsäule ausbilden, so daß auch bei plötzlich ansteigendem Wasser innerhalb des Speichers aufgrund in die Trennvorrichtung plötzlich zufließender erhöhter Abwassermengen kein Wasser in den Auslauf 8 für die Leichtflüssigkeit bzw. das Öl gelangen kann.

Die Abscheidekammer 4 e und der Abscheideraum 4 f sind in der Figur 1o jeweils mit dreieckigen Grundflächen wiedergegeben, wobei natürlich auch rechteckige Grundflächen gewählt werden können und der Speicher 4 g dann außerhalb der Grundfläche der Abscheidekammer 4 e zu liegen kommt. Bei einer derartigen Ausbildung und Anordnung der Abscheidestufen ergibt sich dann auch eine höhere Querschnittsfläche der einzelnen Abscheidestufen und somit ein höheres Volumen der Trennvorrichtung,welches eine noch bessere Abscheidung ermöglicht.

Die Flüssigkeitsniveaus im Speicher 4 g sind zur Unterscheidung der Flüssigkeitsniveaus in der Abscheidekammer 4 e jeweils mit dem Index I gekennzeichnet.

Desweiteren erkennt man in Figur 9 neben dem Speicher 4 g den Längskanal 4o für die Einmündung des Sicherheitsablaufes der Abscheidekammer 4 e, wobei der Ablauf etwa im oberen Drittel dieser Kammer vorgesehen ist.

Sofern Öl in den Kanal 4o gelangt, schwimmt der dort im oberen Bereich befindliche Schwimmer 47 auf und löst dann einen entsprechenden Alarm aus.

In dem schematischen Längsschnitt gemäß der Figur 11 gemäß der Querschnittsansicht gemäß Figur 9 ist im einzelnen die durch einen Schall die Strömung des Wassers durch die Abscheidekammer 4 e nach unten unterhalb der Abscheidekammer 4o für den Sicherheitsablauf und des Abscheideraumes 4 e in die Schleuse 43 a dargestellt. Desweiteren erkennt man den Überlauf der in der Abscheidekammer 4 e anstehenden Leichtflüssigkeit über die Rinne 8 b in den Speicher 4 g bzw. dessen Öffnung 8 b 1 sowie den Eintritt von Leichtflüssigkeit durch die Öffnung 8 b 2 aus dem Abscheideraum 4f. Desweiteren sind im einzelnen die unterschiedlichen Flüssigkeitsniveaus in den Stufen 4 e und 4 f des Leichtflüssigkeitsabscheiders gegenüber den Flüssigkeitsniveaus im Speicher 4 g im einzelnen dargestellt. Der Speicher 4 g weist dabei in einem seitlichen Kanal selbst einen Sicherheitsüberlauf 41 - auf, welcher in dem Kanal 4o mündet.

Desweiteren sind die in den einzelnen Abscheidestufen sich einstellenden maximalen und minimalen Schwerflüssigkeitsniveaus eingezeichnet, welche durch die maximal möglichen Zulaufmengen von Abwassergemisch aufgrund des Öffnungsquerschnitts des Zulaufes 7 und des Strömungswiderstandes der einzelnen Abscheidestufen des Leichtflüssigkeitsabscheiders bestimmt werden. Bei Ausbildung des maximalen Wasserspiegelniveaus kann dabei bei weitem noch keine Schwerflüssigkeit bzw. Wasser über den Ablauf 8 des Speichers bzw. Sammelraumes 4 g in den Ölablauf 8 gelangen.

Der in den Figuren 14 und 15 dargestellte Leichtflüssigkeitsabscheider eignet sich als solcher allein nicht zur Abscheidung eines Flüssigkeitsgemisches mit Schlamm. Vielmehr ist bei einem derartigen Anwendungsfall ein vorgeschalteter Schlammfangtank ähnlich wie bei den Ausführungsformen gemäß den Figuren 5 bis 8 zu verwenden.

Der Leichtflüssigkeitsabscheider 1 besteht aus einem Tank 2 mit recheckiger Grundfläche, wobei seitlich an der Wandung 75 des Tankes 2 der Zulauf 38 für das zu klärende Flüssigkeitsgemisch in die Abscheidekammer 4 und zwar in dessen unteren Bereich 4 g eingeführt wird. Das Flüssigkeitsgemisch strömt dabei auf ein Prallblech 39, welches die Abscheidekammer 4, die sich im oberen Bereich des Tankes 2 erstreckt gegenüber dem übrigen Bereich des Tankes abgrenzt.

Im oberen Bereich 4 a der Abscheidekammer befindet sich dabei oberhalb des Prallbleches 39 eine dickere Schicht von Leichtflüssigkeit, welche per Zufluß weiterer Leichtflüssigkeit über den Auslauf 8 abfließt. Die Abscheidekammer 4 öffnet sich dabei gegenüber dem übrigen Bereich des Tankes 2 am unteren Ende des Prallbleches im Bereich der Wandung 57.Die dort ausströmende Schwerflüssigkeit bzw. das dort auftretende Wasser unterfließt dabei in Richtung zu einem Steigschacht 46 das Prallblech 39 und die Abscheidekammer 4, wo sich unterhalb des Prallbleches 39 ein beruhigter Abscheideraum 2 b ausbildet, in welchem noch mit dem Wasser mitgeführte Ölanteile von spezifisch schwererem Gewicht aufsteigen und durch eine Öffnung oder am Ende des Prallbleches 39 in die Leichtflüssigkeitsschicht des oberen Bereiches 4 a der Abscheidekammer gelangen.

Die einzelnen Abscheidekammern bzw. Abscheideräume sind dabei wie der Steigschacht 46 über die volle Breite des Tankes 2 angelegt, so daß trotz der Anlage des Prallbleches 39 und eines im unteren Bereich des Tankes befindlichen Siebes sich im Abscheider nicht erheblich große Strömungswiderstände ergeben, welche zu einer erheblichen Verringerung der Durchflußleistung und damit zu erhöhten Flüssigkeitsschwankungen führen würden.

Das obere Ende des Steigschachtes 46 mündet dabei in einen Überlauf, der das Wasserniveau H im Abscheider bestimmt. Unterhalb dieses Überlaufes ist dabei eine Überlaufkammer 48 angelegt, welche in den Ablauf 9 für die Schwerflüssigkeit mündet und einen plötzlich für kürzere Zeit erheblich anwachsenden Abfluß von Wasser aufnehmen kann.

Der Zeichnung ist im übrigen deutlich zu entnehmen, daß der Öffnungsquerschnitt des Zulaufes 38 für das zu klärende Flüssigkeitsgemisch erheblich geringer ist als der Rohrdurchmesser des Ablaufes 9 für das geklärte Wasser.

Der Steigschacht 37 ist im übrigen mit einer Ölsperre 3o¯ versehen, welche vom Boden des Tankes ausgeht und sich bis über den Einlauf des Steigkanales 37 des Überlaufes 46 erstreckt. Die Ölsperre 3o¯ ist dabei mit einem hutartigen Überblech 3o¯ ¯ abgedeckt, welche eine Öffnung zur Wandung des Steigschachtes 37 aufweist, so daß evtl.

unter dem hutartigen Überblech sich abscheidendes Öl entlang der äußeren Wandung des Steigschachtes 37 aufsteigen und in den oberen Bereich 4 a der Abscheidekammer entlang der Unterseite des Prallbleches 39 aufsteigen kann.

Zwischen dem Überlauf 46 und der Überlaufkammer 48 ist dabei ein weiterer Überlauf 47 angeordnet, der gegenüber dem Überlauf 46 abgesenkt ist und eine Öffnung 47¯ aufweist, an der ein Behälter 42 für einen Ölsicherheitsablauf der Abscheidekammer 4 anschließbar ist, so daß innerhalb des Behälters befindliches Wasser bei plötzlich zufließenden größeren Öl- oder Wassermengen abfließen kann.

In der Querschnittsansicht der Figur 15 ist im einzelnen deutlich der Zulauf 38 für das Flüssigkeitsgemisch, das Prallblech 39, der Überlauf bzw. die Schleuse 46 des Steigkanales 37 und der in einer geringeren Höhe angeordnete Überlauf 47 für den Behälter des Ölsicherheitsablaufes erkennbar sowie die Überlaufkammer 48, welche gegenüber dem Ablauf für geklärtes Wasser 9 abgesenkt ist.

Desweiteren ergeben sich die Abmessungen des Öffnungsquerschnittes des Zulaufes und des Ablaufes von 125 bzw. 15o mm.

Die in der Höhe gegenüber der Schleuse 46 abgesenkte Schleuse 47 ermöglicht dabei in dem Behälter des Ölsicherheitsablaufes die Ausbildung einer erheblich höheren Ölsäule, also daß auch bei Zulfuß größerer Wassermengen dies nicht aus der Abscheidekammer bzw. dessen Auslauf 8 über den Behälter 42 und dessen Auslauf 49, welcher unterhalb des Auslaufes 8 liegt, in den Sammelbehälter für abgeschiedenes Öl einfließen kann.

Der Behälter 42 für den Ölsicherheitsablauf 8 wird dabei gemäß den Figuren 16 bis 18 als in sich geschlossenes Gehäuse ausgebildet, welches einen Schacht 5o zur Ausbildung einer Ölsäule aufweist, in dessen oberen Bereich der Auslauf 8 mündet und nach unten versetzt der Auslauf 49 für das Öl zum Sammelbehälter angelegt ist. Der Behälter 42 weist dabei seitlich des Kanals 5o weitere parallele Kanäle 51, 51ˉ und 51ˉ ˉ auf, in welchen im Normalzustand Wasser ansteht, welches über den Auslauf 47ˉ mit dem Wasser vor dem Überlauf 47 in Verbindung steht. Die Wandung der Speicherkammer 51 gegenüber der Kammer 5o öffnet sich dabei am unteren Abschnitt gegenüber dem Speicherkanal 5o. Dehnt sich nun Öl in dem Speicherkanal 5o nach unten in den Kanal 51 aus, so steigt das Öl in diesen Kanal auf bis zu Oberfläche des durch den Abfluß 47ˉ bestimmten Wasserniveaus. Sobald sich eine größere Ölschicht dort ausgebildet hat, gerät das Öl in einen Becher 53, welcher bei Füllung den Hebel einer Alarmvorrichtung 52 verschwenkt und somit einen Alarm auslöst. Soweit das Öl noch weiter ansteigt, gelangt es über einen weiteren Sicherheitsablauf 55 unmittelbar in den Behälter zum Auffangen des abgeschiedenen Öls.

Bei den Leichtflüssigkeitsabscheidern nach den Figuren 19 und 2o sind zur Aufrechterhaltung eines im wesentlichen konstanten Flüssigkeitsniveaus Eingangs- und Ausgangsschleusen in Form der am Eingang befindlichen Überläufe 58, 59 und 6o sowie des Steigschachtes 37 mit Ausgangsüberlauf 46 vorgesehen. Hierbei fließt das Flüssigkeitsgemisch zunächst in ein Einlaufbecken 2 a, welches in einem Gehäuseteil 62 bzw. 62ˉ angelegt ist, das im oberen Bereich der Einmündungskammer 4 liegt. Das im oberen Bereich 4 a liegende Gehäuse weist dabei jeweils ein abgesenktes Einlaufbecken auf, in dessen Flüssigkeitsspiegel der Zulauf für das Flüssigkeitsgemisch 7 eingetaucht ist. In der Ausführungsform gemäß Figur 19 besitzt das Gehäuse dabei eine doppelseitige jeweils nach rechts und nach links sich erstreckende Eingangsschleuse mit abgeschrägten Überlaufflächen 58 und 59, während in der Ausführungsform nach Figur 2o lediglich ein einziger nach links weisender Überfluß mit einer abgeschrägten Fläche 6o vorgesehen ist. Unterhalb des Gehäuses 62, 62ˉ wird dabei jeweils der Sammelraum für die abzuscheidende Leichtflüssigkeitsschicht angelegt, wobei jeweils ein Raum unter den Flächen 58. 59, 6o zu liegen kommt (Räume 4 $a_1$, 4 $a_2$ bzw.

4 $a_2$ in der Figur 2o). In Figur 2o ist die Leitfläche 6o in Form einer schrägen Schachtschleuse ausgeführt, wobei sich das oberhalb der Leitfläche 6o befindende Winkelblech 61 nach links oben unter Bildung eines weiteren Sammelraumes 4 $a_1$ öffnet. In den Sammelräumen sind dabei jeweils Ausläufe 8, 8' für die Leichtflüssigkeit vorgesehen.

Die abgeschrägten Flächen 58, 59, 6o tragen dazu bei, daß das aus den Einlaufbecken 2 a ausfließende Wasser nicht in Art eines Wasserfalles in die Abscheidekammer 4 einfließt. Das Einlaufbecken selbst verringert aufgrund des in seiner Flüssigkeit weitgehend eingetauchten Zulaufes 7 für das Flüssigkeitsgemisch die Strömungsgeschwindigkeit dieses zufließenden Gemisches.

Die Überläufe bzw. die abgeschrägten Leitflächen 58,59,6o erstrecken sich ebenso wie die Einlaufbecken 2 a unter Bildung einer Rinnenschleuse jeweils über die gesamte Breite des Tankes des Leichtflüssigkeitsabscheiders, so daß bei dem doppelseitigen Überlauf des Abscheiders nach Figur 19 die Schleusenbreite praktisch verdoppelt und dementsprechend die Einlaufgeschwindigkeit und die Flüssigkeitsspiegelschwankungen halbiert werden. Die doppelseitige Rinnenschleuse gemäß Figur 19 bewirkt dabei eine ganz enorme Verminderung der Strömungsgeschwindigkeit der Flüssigkeit im Einlauf 7 und eine enorme Verringerung der Wasserspiegelschwankungen. Z.B. kann bei einer Rinnenschleusenlänge von 1m und einer Zulaufmenge von 6 l/sec. die Wasserschwankung bis maximal unter 2 cm und die Strömungsgeschwindigkeit von ca. 1m/sec. auf 15 bis 2o cm/sec. reduziert werden.

Der in Figur 19 dargestellte Abscheider ist in einem Maßstab von 1:1o gezeichnet und besitzt in dem Abschnitt, wo die Abscheidekammer 4 angelegt ist, eine Grundfläche von 8o x 1oo cm. Bei einer Durchlaufmenge von 6 l beträgt die Fallgeschwindigkeit o.o7 cm/sec. und es ergibt sich eine Durchflußdauer von etwa 2 min. In den schematischen Darstellungen der Abscheider nach den Figuren 19 und 2o ist dabei der Abscheideraum 2 b, zwischen der Abscheidekammer 4 und dem Steigkanal 37 nur schematisch angedeutet.

Die Anlage einer doppelseitigen Rinnenschleuse nach Figur 19 mit einem relativ kurz bemessenen Abscheideraum,–und zwar bildet er sich zwischen Abscheidekammer 4 und Steigkanal 37 in einer Länge von etwa 1o cm, wobei die Kammer 4 und der Raum 2 b sowie die doppelseitige Rinnenschleuse und der Steigkanal bzw. die Schachtschleuse 37 am Auslauf sich jeweils über die volle Tankbreite des Abscheiders erstrecken,–hat sich dabei als ausreichend erwiesen, um Durchflußleistungen von 3 l/sec. zu bewältigen, wobei noch ein Wirkungsgrad von über 97% erreicht wird.

In dem Leichtflüssigkeitsabscheider gemäß den Figuren 21 und 22 findet im Gegensatz zu der doppelseitigen Rinnenschleuse nach Figur 19 eine vierseitige Schleuse Verwendung, wobei die vierseitige Schleuse ueber ein in der schachtförmigen Abscheidekammer 4 im oberen Bereich eingetauchte etwa quadratische GLocke 64 gebildet wird. Die Glocke weist dabei im oberen Teil ein Einlaufbecken 2a auf, in welches der Zulauf 7 fuer das Fluessigkeitsgemisch seitlich eingefuehrt ist, und in der Mitte eine kuppelförmige Erhebung 67, welche sich nach unten in die Abscheidekammer durch Bildung eines Raumes 4 a zum Sammeln von Leichtfluessigkeit öffnet. Die Glocke weist dabei nach unten noch Ansätze auf, die in die Abscheidekammer noch tiefer als die Kuppel 67 ragen, so daß durch diese Ansätze ein Teil des unteren Bereichs 4 b der Abscheidekammer 4 zum Ansammeln von Schwerfluessigkeit gebildet wird. Im oberen Bereich der Kuppel 67 sind jeweils einzelne Steigleitungen zur Abfuehrung der Leichtfluessigkeit angelegt, wobei diese Leitungen $8_1$, $8_2$ usw. jeweils auf unterschiedlicher Höhe angeordnete Ausläufe aufweisen, so daß für je nach spezifischen Gewichten abzuscheidende Leichtfluessigkeit ein entsprechender auf geeigneter Höhe angeordneter Auslauf gewählt werden kann.

Der Abscheideraum 2 b zwischen der Abscheidekammer 4 und dem Steigkanal bzw. Auslauf fuer die Schwerfluessigkeit ist hierbei in dieser Ausfuehrungsform ebenfalls nur angedeutet.

In der Querschnittsansicht nach Figur 22 erkennt man, daß das Einmuendungsbecken 2 a von unten den glockenförmig ausgebildeten Bereich 4 a der Abscheidekammer 4 bildet und in Form einer vierseitigen Pyramide aus dem Einlaufbecken 2 a hervorragt. Oben ist dabei der Zulauf fuer das Fluessigkeitsgemisch 7 dargestellt, wobei sich im unteren Bereich der Zeichnung der Ueberlauf 46 und der Ablauf 9 fuer die Schwerfluessigkeit erkennen läßt.

Wesentlich fuer die Funktion des Gehäuseeinsatzes 64 im Einlaufbecken 4 mit vierseitigem Ueberlauf ist dabei das zwischen den Ueberläufen bzw. dem Außenmantel 65 des Gehäuses 64 und den Wandflächen der Abscheidekammern jeweils noch Abscheidekanäle offengelassen sind, so daß das Fluessigkeitsgemisch aus dem Einlaufbecken 2 a in die Abscheidekammer 4 ueber die seitlich der Mantelflächen 65 sich erstreckenden Kanäle in die Abscheidekammer 4 gelangen kann.

Bei der Verwendung eines Leichtfluessigkeitsabscheiders mit einseitiger Zulaufschleuse gemäß Figur 2o wird dabei bei einem Leitungsquerschnitt des Zulaufes von 125 mm und einem Fuellungsgrad (h/D) von o,5,bei einer Strömungsgeschwindigkeit von 1m/sec, und somit einer Durchflußleistung von ca. 6.ooo $cm^3$/ sec. bei Verwendung einer einfachen Rinnenschleuse von 1m und bei einem Ueberlauf von 2 cm eine Verringerung der Strömungsgeschwindigkeit des Fluessigkeitsgemisches auf 3o cm/sec. erreicht und bei Verwendung einer doppelseitigen Rinnenschleuse gemäß Figur 19 bei einer Ueberlaufhöhe von 2 cm ueber der Schleuse eine Strömungsgeschwindigkeit von 15 cm/sec. Bei einer Ueberlaufhöhe von 3 cm wird dagegen bei einer Rinnenschleusenbreite von 1 m eine Reduzierung der Strömungsgeschwindigkeit auf 2o cm/sec. erreicht und bei einer 2 m breiten doppelseitigen Rinnenschleuse bei einer Ueberlaufhöhe von 3 cm eine Strömungsgeschwindigkeit von 1o cm/sec.

erreicht.

Bei den Leichtfluessigkeitsabscheidern nach den Figuren 23 und 24 ist jeweils wieder in der Abscheidekammer im oberen Bereich ein Einlaufbecken 2 a vorgesehen, in welches der Zulauf 7 des Fluessigkeitsgemisches muendet. Das Gehäuse 64 des Einlaufbeckens ist dabei etwa in Breite des oberen Bereichs der Abscheidekammer 4 angelegt und weist von unten gesehen einen Hohlraum zur Bildung des Sammelraumes fuer Leichtfluessigkeit auf, wobei in diesem Raum im oberen Abschnitt der Auslauf 8 fuer die Leichtfluessigkeit angelegt ist.

In der Ausfuehrungsform nach Figur 23 hat die Abscheidekammer 4 zunächst in ihrem oberen Bereich die Form eines zylinderförmigen Schachtes, welcher sich unterhalb des Gehäuses 64 verengt und dann trichterartig in Form einer Glocke nach außen weitet. Der Schacht verläuft dabei über die Breite des Abscheiders.
Der Mantel der Glocke ist dabei in einem genuegenden Abstand vom Steigschacht 37 angelegt, so daß zwischen ihm und diesem Steigschacht 37 der strömungsfreie Abscheideraum 2 b mit Auslauf 8' fuer sich abscheidende Leichtfluessigkeit gebildet wird. Der Steigschacht 37 muendet in einen Restölabscheider 38 mit einem Ueberlauf 46, wobei dessen Ablauf 9 ueber einen Geruchsverschluß 69 verschlossen ist.

Im Gegensatz zum Abscheider nach Figur 23 weist der Abscheider nach Figur 24 eine nicht mittig im Tank angeordnete Abscheidekammer 4 auf sondern eine seitlich im oberen Bereich angeordnete Abscheidekammer, dessen untere Öffnung sich auch nicht ueber die volle Querschnittsbreite öffnet sondern ueber ein Leitblech die ausströmende Fluessigkeit zur rechten Seitenwand des Tankes leitet, so daß die Fluessigkeit dann quer durch den ganzen Abscheider zu dem auf der gegenueberliegenden Seitenwandung befindlichen Tauchrohr 1o des Ablaufes 9 fließt. Bei dieser Ausfuehrungsform wird dabei ebenfalls wie bei dem Leichtfluessigkeitsabscheider nach den Figuren 25 und 26 ein ueber eine große Strömungslänge sich erstreckender Abscheideraum 2 b mit dort im oberen Bereich 4 $a_2$ anstehender Leichtfuessigkeit gebildet. Der Abscheider weist dabei ebenfalls eine Restölabscheidung 68 auf sowie einen Ueberlauf 46 mit Geruchsverschluß 69.

Bei der Ausfuehrungsform gemäß Figur 25 und 26 ist der Auslauf der Abscheidekammer 4 ebenfalls seitlich zur Wandung 57 des Gehäuses gefuehrt, wobei die Fluessigkeit dann durch einen schräg nach oben in den Bereich 4 $a_2$ fuehrenden Steigkanal 72 geleitet wird, der sich ueber die gesamte Behälterbreite erstreckt. In dem Kanal wird zunächst die Strömungsgeschwindigkeit erheblich vergrößert, wobei dann die Strömung der im oberen Bereich des Kanals austretenden Fluessigkeit sich wieder erheblich verringert und diese Fluessigkeit dann an der im Bereich 4 $a_2$ befindlichen Leichtfluessigkeit vorbeistreicht, wobei eine erneute Abscheidung von im Wasser mitgefuehrtem Öl erreicht wird. Die Fluessigkeit strömt dann nach unten zum Steigkanal 37, welcher sich ebenfalls ueber die gesamte Behälterbreite erstreckt.

Der Zulauf 7, welcher in das Einlaufbecken muendet, ist dabei zur Verringerung der Strömung der Fluessigkeit im Einlaufbecken dort mit zwei Rohrensätzen 7 a, 7 b eingefuehrt.

Patentansprüche:

1. Verfahren zum kontinuierlichen Trennen der Komponenten eines Flüssigkeitsgemisches unterschiedlicher spezifischer Gewichte, insbesondere zum Trennen einer Leichtflüssigkeit wie Öl oder Benzin von einer Schwerflüssigkeit wie Wasser, unter Verwendung einer aus einem Zuleitungsraum (7) für das Flüssigkeitsgemisch und einem Sammelraum (11) für die Leichtflüssigkeit bestehenden, in eine Schwerflüssigkeit eintauchenden, sich nach unten öffnenden Abscheidekammer (4),
sowie eines außerhalb dieser Abscheidekammer (4) befindlichen Tauchrohres (10), zum Abfluß von Schwerflüssigkeit zu einer das Schwerflüssigkeitsniveau im Normalzustand der Trennvorrichtung (1) bestimmenden Auslauföffnung (9), und mit einer Überlauföffnung (8) oberhalb des im Normalzustand sich ausbildenden Schwerflüssigkeitsniveaus zum Abfluß der Leichtflüssigkeit,
dadurch gekennzeichnet, daß bei Aufrechterhaltung eines im wesentlichen konstanten Schwerflüssigkeitsniveaus durch Begrenzung geeigneter Zu- bzw. Ablaufmengen, das Flüssigkeitsgemisch aus dem Zuleitungsraum (7) in den Sammelraum (11) in oder unterhalb der abgeschiedenen Leichtflüssigkeitsschwimmschicht geführt wird,
daß die sich nach unten öffnende Abscheidekammer (4) derartig abgemessen und zum äußeren Schwerflüssigkeitsspiegel angeordnet wird, daß sich in dem Sammelraum (11) bzw. in dem oberen Bereich 4a der Abscheidekammer(4)unterhalb des äußeren Schwerflüssigkeitsniveaus entsprechend der Höhenanordnung des Ablaufes bzw. die Überlauföffnung(8) für Leichtflüssigkeit gegenüber dem äußeren Schwerflüssigkeitsniveau und der unterschiedlichen spezifischen Gewichte von Schwer- und Leichtflüssigkeit eine maximale Leichtflüssigkeitsschicht ($H-H_1$) als Puffer gegen Schwerflüssigkeitsströmungen von zugeflossenem Flüssigkeitsgemisch ausbildet, wobei im unteren Bereich (4b) der Abscheidekammer (4) unter der Leichtflüssigkeitsschicht eine zusätzliche Abscheidung und Beruhigung der Anteile der Leichtflüssigkeit, insbesondere von spezifisch leichterem Gewicht, erfolgt, und daß die aus der Abscheidekammer (4) austretende Flüssigkeit unterhalb eines strömungsfreien Abscheideraumes (2b) geführt wird, bevor die Schwerflüssigkeit über das Tauchrohr (10) zum Abfluß gebracht wird.

2. Verfahren nach Anspruch 1, dadurch gekennzeichnet, daß durch eine gegenüber den in der Trennvorrichtung (1) maximal auftretenden Schwankungen der Schwerflüssigkeitsniveaus geeignet hochgewählte Höhenanordnung des Ablaufes (8) der Leichtflüssigkeit oberhalb des äußeren Schwerflüssigkeitsniveaus eine große Schichtdicke (h) der im oberen Bereich der Abscheidekammer befindlichen Leichtflüssigkeit angesammelt wird.

3. Verfahren nach Anspruch 1 oder 2, dadurch gekennzeichnet, daß vor dem Zuleitungsraum (7) ein Vorabscheider (2a) zur Beruhigung der Strömung bzw. Vorabscheidung der Komponenten des Flüssigkeitsgemisches, insbesondere von Schlamm, angelegt ist, wobei zur Entnahme des Schlammes aus diesem Vorabscheider (2a) die Leichtflüssigkeit durch Zuleitung von Schwerflüssigkeit, in den Zulei-

leitungsraum (7) gedrückt wird.

4. Verfahren nach Anspruch 3, dadurch gekennzeichnet, daß durch eine in den Flüssigkeitsspiegel des Vorabscheiders (2a) eingetauchte, etwa halbkreisförmige Einlaufzunge (25) mit einer zum Flüssigkeitsspiegel nach oben abgebogenen Randabkantung stetig ein Gemisch aus Leicht- und Schwerflüssigkeit dem Zuleitungsraum (7) durch Zufluß von neuem zu klärenden Flüssigkeitsgemisch zugeleitet wird.

5. Verfahren nach einem oder mehreren der Ansprüche 1 bis 4, dadurch gekennzeichnet, daß zur Verhinderung eines mittel- oder unmittelbaren Kontaktes zwischen strömender Schwerflüssigkeit und abgeschiedener Leichtflüssigkeit die in einem ersten Sammelraum bzw. einer ersten Abscheidekammer (4e) der Trennvorrichtung (1) oberhalb der dortigen Schwerflüssigkeit abgeschiedene Leichtflüssigkeit in einem vor der strömenden Schwerflüssigkeit geschützten Speicher bzw. Einmündungsraum (4g) zugeführt wird, wobei sich dort eine Leichtflüssigkeitssäule unter Verdrängung der dortigen Schwerflüssigkeit in einem von der Strömung der Trennvorrichtung (1) geschützten Teil über eine Öffnung (45) zu der den Speicher unter- bzw. umströmenden Schwerflüssigkeit ausbildet und zu einem Ablauf (8) für Leichtflüssigkeit ansteigt.

6. Verfahren nach Anspruch 5, dadurch gekennzeichnet, daß durch Anordnung eines Überlaufes für die Leichtflüssigkeit bzw. einer von der Schwerflüssigkeit zu unterfließenden sperrenartigen Schleuse, insbesondere mit zwei Trennwandungen (43b) zwischen dem ersten Zuleitungsraum bzw. der ersten Abscheidekammer (4e) und dem nachfolgenden Abscheideraum (4f) in der Trennvorrichtung (1) zwei unterschiedliche Schwerflüssigkeitsniveaus $H_I$ und $H_{II}$ gebildet werden und entsprechend unterschiedliche Leichtflüssigkeitsniveaus $h_I$, $h_{II}$ der aufeinanderfolgenden Sammelräume bzw. eines Behälters eines Sicherheitsüberlaufes für Leichtflüssigkeit (11', 42, 41).

7. Verfahren nach Anspruch 5, dadurch gekennzeichnet, daß in dem ersten Raum (4e) ein höherer Schwerflüssigkeitsstand erzeugt wird, beispielsweise durch eine in ihrer Höhe verlängerte Trennwand (43b), welche sich zum Boden des Abscheiders in Richtung der Trennwand (43a) öffnet und oberhalb dieser geführt ist.

8. Verfahren nach Anspruch 7, dadurch gekennzeichnet, daß die Leichtflüssigkeit über eine in der Trennwand (43) angelegte Öffnung ($8b_1$) zum Überlauf der Leichtflüssigkeit zum Speicher (4g) geführt wird.

9. Verfahren zum kontinuierlichen Trennen der Komponenten eines Flüssigkeitsgemisches unterschiedlicher spezifischer Gewichte nach einem oder mehreren der Ansprüche 6 bis 8, dadurch gekennzeichnet, daß vor dem Ablauf (9) der Schwerflüssigkeit ein weiterer Überlauf (44) angeordnet ist, der in seiner Höhe niedriger als die niedrigste der zum Vorscheider gerichteten Trennwandungen (43, 43a) ist, der oberhalb des Ablaufes (9) bzw. in Höhe dessen Ablauföffnung ausläuft und sich vorzugsweise über die gesamte Abscheiderbreite erstreckt und über ein Tauchrohr (10) bzw. einen in der Breite des Abscheiders ausgebildeten Kanal zum Boden der Trennvorrichtung (1) in eine leichtflüssigkeitsfreie Zone des auf ein niedrigeres Schwerflüssigkeitsniveau abzusenkenden Bereichs geführt ist.

BAD ORIGINAL

10. Verfahren nach einem oder mehreren der Ansprüche 7 bis 9,
dadurch gekennzeichnet, daß in dem Speicher (4g) durch geeignete Einmündung und Anordnung der Abflußöffnung (45) für die sich im Speicher absetzende Schwerflüssigkeit ein mit dem Flüssigkeitsniveau in der zweiten Abscheidekammer kommunizierendes Flüssigkeitsniveau unter Ausbildung einer möglichst hohen Schwer- und Leichtflüssigkeitssäule erzeugt wird, beispielsweise durch Verwendung eines Tauchrohres, das vom Boden des Speichers (4g) zu einer auf geeigneter Höhe gelegenen seitlichen Abflußöffnung (45) reicht.

11. Verfahren nach einem oder mehreren der Ansprüche 1 bis 10,
dadurch gekennzeichnet, daß als erste Abscheidekammer (4) eine sich nach unten trichterartig verbreiternde Einmündungsglocke verwendet wird.

12. Vorrichtung zum kontinuierlichen Trennen der Komponenten eines Flüssigkeitsgemisches von unterschiedlicher spezifischer Gewichte, insbesondere zum Trennen einer Leichtflüssigkeit wie Öl oder Benzin von einer Schwerflüssigkeit wie Wasser, mit einer aus einem Zuleitungsraum (7) für das Flüssigkeitsgemisch und einem Sammelraum (11) für die Leichtflüssigkeit bestehenden, in eine Schwerflüssigkeit eingetauchten, sich nach unten öffnenden Abscheidekammer (4), sowie mit einem außerhalb dieser Abscheidekammer (4) befindlichen Tauchrohr (10) zum Abfluß von Schwerflüssigkeit zu einer die das Schwerflüssigkeitsniveau im Normalzustand der Trennvorrichtung (1) bestimmenden Auslauföffnung (9),
und mit einer Überlauföffnung (8) oberhalb des im Normalzustand sich ausbildenden Schwerflüssigkeitsniveaus zum Abfluß der Leichtflüssigkeit,

d a d u r c h g e k e n n z e i c h n e t , daß der Zuleitungsraum (7) im Sammelraum (8) in oder unterhalb der abgeschiedenen Leichtflüssigkeitsschwimmschicht mündet,
daß die sich nach unten öffnende Abscheidekammer (4) eine derartige Abmessung und Anordnung zum äußeren Schwerflüssigkeitsspiegel aufweist, daß die Länge des unter das Schwerflüssigkeitsniveau im Normalzustand eingetauchten Wandungsabschnittes der Abscheidekammer (4) größer ist als die Höhe der sich im Sammelraum (8) bzw. in der Abscheidekammer (4) unterhalb des äußeren Schwerflüssigkeitsniveaus entsprechend der Höhenanordnung des Überlaufes für Leichtflüssigkeit und der unterschiedlichen spezifischen Gewichte sich maximal bildenden Leichtflüssigkeitsschicht ($H-H_1$), wobei der untere Bereich der Abscheidekammer (4) unter der Leichtflüssigkeitsschicht einen zusätzlichen Abscheideraum bzw. Beruhigungsraum (4b) für Anteile der Leichtflüssigkeit von spezifisch leichterem Gewicht bildet,
daß die Überlauföffnung für die Leichtflüssigkeit durch ein in den Sammelraum (8) mündendes Rohr (11) gebildet wird, und die Anordnung der Überlauföffnung dieses Rohres oberhalb des durch die möglichen Zulauf- und Ablaufmengen bestimmten maximalen Schwerflüssigkeitsniveaus (H) erfolgt,
und daß die Anordnung des Tauchrohres bzw. der Ableitung für den Abfluß der Schwerflüssigkeit zur Auslauföffnung (9) im Abstand von der Abscheidekammer (4) bzw. deren unteren Öffnung erfolgt, wobei gegebenenfalls vorhandene spezifisch schwerere Anteile der Leichtflüssigkeit auf dem Weg von der unteren Öffnung der Abscheidekammer (4) durch Unter-oder durchströmen eines von der eigentlichen Strömung in der Trennvorrichtung (1) geschützten Raumes (2b) auf dem Weg von der unteren Öffnung der Abscheidekammer (4) zum Tauchrohr vor Eintritt in diesem aufsteigen und sich absetzen können.

13. Vorrichtung nach Anspruch 12, dadurch gekennzeichnet, daß die Abscheidekammer (4) durch eine bis auf Zuführungs- und Abführungsleitungen oben geschlossene Einmündungsglocke gebildet wird, wobei der obere Bereich der Glocke (4) den Sammelraum (11) für die Leichtflüssigkeit bildet und das Rohr (11) für den Überlauf der Leichtflüssigkeit einen Innendurchmesser aufweist, welcher gegenüber der inneren Querschnittsabmessung der Glocke (4) erheblich verringert ist.

14. Vorrichtung nach Anspruch 12 oder 13, dadurch gekennzeichnet, daß die Abscheidekammer bzw. Einmündungsglocke (4) sich nach unten trichterartig verbreitert.

15. Vorrichtung nach den vorhergehenden Ansprüchen, insbesondere nach Anspruch 14, dadurch gekennzeichnet, daß eine über ihre gesamte Höhe einen runden oder rechteckigen Querschnitt aufweisende Einmündungsglocke verwendet wird, deren unterer Abschnitt sich düsenartig zur Beruhigung der Strömung der Schwerflüssigkeit nach außen wölbt.

16. Vorrichtung nach einem oder mehreren der Ansprüche 12 bis 15, dadurch gekennzeichnet, daß das Flüssigkeitsgemisch zentral insbesondere über ein von oben in die Abscheidekammer bzw. die Einmündungsglocke (4) im Bereich der Leichtflüssigkeitsschicht angeordnetes Rohr (7, 29) eingeleitet wird.

17. Vorrichtung nach einem oder mehreren der Ansprüche 12 bis 16, dadurch gekennzeichnet, daß in der Abscheidekammer (4) in einem oberen Bereich (4a) bis zur Höhe $H_1$ eine Leichtflüssigkeitsschwimm-

schicht ansammelbar ist und in einem unteren Bereich (2b) der Abscheidekammer (4) ein Raum gebildet wird, in welcher Schwerflüssigkeit ansteht, und das Mittel (2a) schon vor dem Zuleitungsraum (7) angelegt sind, um zu einer Verringerung der Schwankungen, insbesondere des Flüssigkeitsspiegels der Schwerflüssigkeit in der Abscheidekammer (4) zu führen, sowie die Strömungsgeschwindigkeit des einfließenden Gemisches zu reduzieren.

18. Vorrichtung, insbesondere nach Anspruch 17, dadurch gekennzeichnet, daß der Zuleitungsraum als Einflußrohr (7) ausgebildet ist, welches insbesondere unterhalb der Schicht der Leichtflüssigkeit durch einen Anschluß (29) geführt ist, und dort einen Pralltteller (29') mit sich lediglich seitlich öffnendem Auslaß aufweist.

19. Vorrichtung nach den Ansprüchen 12 bis 15, dadurch gekennzeichnet, daß der Zuleitungsraum (7) als Einflußrohr (38) ausgebildet ist, welches seitlich im Bereich(4a)der Abscheidekammer oberhalb des Überlaufes (9) der Schwerflüssigkeit vorgesehen ist, und daß dabei die Zuleitung (38) in einen Bereich bis unterhalb des Niveaus $H_1$ der Leichtflüssigkeitsschicht geführt ist.

20. Vorrichtung nach Anspruch 19, dadurch gekennzeichnet, daß die Zuleitung (38) auf ein über die Breite der Abscheidekammer sich erstreckendes schräg in dieser Kammer angeordnetes, nach oben in die Mitte des oberen Bereiches (4a) der Abscheidekammer und nach unten seitlich zur Wandung des unteren Bereiches (4b) der Abscheidekammer gerichtetes Prallblech (39) geführt ist, wobei ein gebündelter Strahl eines Flüssigkeitsgemisches auf das Prallblech (39) geführt wird.

21. Vorrichtung nach einem oder mehreren der vorhergehenden Ansprüche 12 bis 20, dadurch gekennzeichnet, daß der Öffnungsquerschnitt des Einflußrohres bzw. Zuleitungsrohres (7, 13, 38) geringer als zumindest entweder des Ablaufquerschnittes oder eines Querschnittes der in der Trennvorrichtung (1) zu durchfließenden oder unterfließenden Wandungen ausgebildet ist. (Öffnungsquerschnitt der Zuleitung z. B. 125 mm und des Ablaufes 150 mm bei einer maximalen Durchflußleistung von 5 bis 6 l/sec bei Atmosphärendruck).

22. Vorrichtung nach einem oder mehreren der Ansprüche 12 bis 21, dadurch gekennzeichnet, daß der Abscheidekammer (4, 4f) ein als Schachtschleuse oder Rinnenschleuse ausgebildetes Einlaufbecken (2a, 62, 62') vorgeschaltet ist, wobei der Einlauf des Flüssigkeitsgemisches in das Einlaufbecken unterhalb des Flüssigkeitsspiegels der dort anstehenden Flüssigkeit geführt ist.

23. Vorrichtung nach Anspruch 22, dadurch gekennzeichnet, daß der Flüssigkeitsspiegel des Einlaufbeckens bzw. der Ablauf der Überlaufschleuse zur Abscheidekammer höher als der Flüssigkeitsspiegel (H) der Schwerflüssigkeit außerhalb der Abscheidekammer (4) ist.

24. Vorrichtung nach Anspruch 23, dadurch gekennzeichnet, daß der Ab- bzw. Überlauf der Eingangsschleuse bzw. des Einlaufbeckens (2a, 62, 62') mit der in oder unterhalb der Leichtflüssigkeitschwimmschicht in dem Einmündungsraum (4) führenden Zuleitung (66) bzw. Zuführungsleitung (———) über eine als schiefe Ebene ausgebildete Leitrinne bzw. Leitfläche (60) in Verbindung stehen.

25. Vorrichtung zum kontinuierlichen Trennen der Komponenten eines Flüssigkeitsgemisches von unterschiedlicher spezifischer Gewichte,
d a d u r c h g e k e n n z e i c h n e t , daß ein Einlaufbecken ( 2a ) mit doppelseitigem Überlauf bzw. Rinnenschleuse (58, 59) bzw. mit einem zu allen 4 Seiten sich öffenden Überlauf bzw. einer vierseitigen Schachtschleuse, welches mittig oder seitlich zur Abscheidekammer (4) angelegt ist, vorgesehen ist.

26. Vorrichtung nach Anspruch 25,
d a d u r c h g e k e n n z e i c h n e t , daß das Einlaufbecken (2a ) oberhalb des Mantels (—) der Glocke (64 ) durch einen am gesamten Rand der Glocke angelegten Ansatz (65 ) gebildet ist.

27. Vorrichtung nach Anspruch 26,
d a d u r c h g e k e n n z e i c h n e t , daß das obere Ende des Ansatzes (65 ) als allseitiger Überlauf ausgebildet ist, wobei der Einlauf im Einmündungsraum (4) durch einen allseitig schmalen Schlitz (66 ) erfolgt.

28. Vorrichtung nach einem oder mehreren der Ansprüche 25 bis 27,
d a d u r c h g e k e n n z e i c h n e t , daß unterhalb der beiden Leitflächen bzw. Rinnen (58 , 59 ) der Rinnenschleusen (60 , 61 ) jeweils ein oberer Raum $4\,a_1$, $4\,a_2$) zur Sammlung von Leichtflüssigkeit angelegt ist, wobei daß Einlaufbecken (36) im wesentlichen mittig in dem Tank bzw. der Abscheidekammer (4) angelegt ist.

29. Vorrichtung zum kontinuierlichen Trennen der Komponenten eines Flüssigkeitsgemisches von unterschiedlicher spezifischer Gewichte,
d a d u r c h g e k e n n z e i c h n e t , daß

BAD ORIGINAL

die Abscheidekammer (4) über die gesamte Breite des Tanks (2) im Abstand zum Tauchrohr (10) zur Bildung des beruhigten Abscheidungsraumes (2b) angelegt ist.

30. Vorrichtung nach einem oder mehreren der vorhergehenden Ansprüche 12 bis 29,
d a d u r c h g e k e n n z e i c h n e t , daß das Tauchrohr (10) zum Abfluß der Schwerflüssigkeit koaxial außen mit einem Überrohr versehen ist und in einen oberen Abschnitt gegebenenfalls mit einer koaxial das Überrohr (30') umgreifenden, vom Tauchrohr (10) ausgehenden Einmündungsglocke (30''), wobei in der oberen Mantelfläche der Einmündungslocke Öffnungen zum Abführen von dort angesammelter Leichtflüssigkeit angelegt sind.

31. Vorrichtung nach einem oder mehreren der vorhergehenden Ansprüche 12 bis 30,
d a d u r c h g e k e n n z e i c h n e t , daß der Zulauf des Tauchrohres (10) für den Ablauf der Schwerflüssigkeit mit einem Ölabscheider (30'') am Einlauf vor einer zu unterfließenden Quersperre (30') versehen ist, wobei das Tauchrohr (10) vorzugsweise als Schachtschleuse mit Überlauf ausgebildet ist, welche sich über die ganze Breite der Trennvorrichtung (1) erstreckt.

32. Vorrichtung nach einem oder mehreren der vorhergehenden Ansprüche 12 bis 31,
d a d u r c h g e k e n n z e i c h n e t , daß die Abscheidekammer (4) durch einen auswechselbaren Kanister (24) gebildet wird, welcher an seiner Unterseite einen verschließbaren Auslauf (27) aufweist, wobei durch eine Führung (32) für einen Grenzschichtschwimmer (33) mit einem Sperrmechanismus (34) der Auslauf (27) bei Füllung des oberen Bereiches (4a) des Kanisters (24) schließbar ist.

0037855

33. Vorrichtung nach einem oder mehreren der vorhergehenden Ansprüche 12 bis 32, dadurch gekennzeichnet, daß ein Sicherheitsablauf (11) für Leichtflüssigkeit seitlich im unteren Bereich der Abscheidekammer im Bereich der Grenzschicht angelegt ist, wobei der Sicherheitsablauf zum Ablfuß des Öls mit einem Sammelbehälter für Öl verbunden ist und eine Sperrvorrichtung des Zulaufes zur Trennvorrichtung (1) auslöst.

34. Vorrichtung nach Anspruch 33, dadurch gekennzeichnet, daß am Auslauf (8) der Leichtflüssigkeit in der Abscheidekammer (4) ein als Sicherheitsüberlauf dienender Behälter (42) angeschlossen ist, der auf ein tieferes Schwerflüssigkeitsniveau (H) über einen entsprechenden Überlauf (47) für Schwerflüssigkeit eingestellt ist, wobei die Leichtflüssigkeit in dem Behälter in einer säulenartigen Speicherkammer (5o) gesammelt und über einen gegenüber den Auslauf (8) für Leichtflüssigkeit tiefer gelegenen Auslauf zum Überlauf (49) geführt wird, und daß als Sicherheitsüberlauf in dem Behälter (42) eine seitlich der Speicherkammer mit Wasser gefüllte Kammer angelegt ist, an deren oberen Ende eine elektrische Alarmanlage vorgesehen ist, die durch einen bei einer zu hohen Leichtflüssigkeitsschicht sich mit Leichtflüssigkeit füllenden und verschwenkenden Becher oder Schwimmer ausgelöst wird.

35. Vorrichtung nach einem oder mehreren der vorhergehenden Ansprüche 12 bis 34, dadurch gekennzeichnet, daß die Abscheidekammer (4) mit einem die Strömung in der Trennvorrichtung von der ruhigen Zone (2b) im zweiten Abscheideraum ablenkenden Leitblech bzw. Schleuse versehen ist und daß dabei die Flüssigkeit derart mit Resten der Leichtflüssigkeit nach oben und unter Drosselung der Strömungsgeschwindigkeit zur Unterseite von der dort befindlichen Leichtflüssigkeitsschicht geführt wird, daß durch Kontakt zwischen Schwer- und Leichtflüssigkeit eine weitere Restabscheidung erfolgt, und daß anschließend die Strömung nach unten zum Einlauf in ein Tauchrohr (10) bzw. eine Vorrichtung zu einer weiteren Restabscheidung vorzugsweise mit einem Geruchsverschluß zur Auslauföffnung (9) geführt wird.

Blatt 1

Fig. 1
1
2
3
4
4a
4b
5
6
7
8
9
10
11
12
13
14
15
16
17
18
19
h
H
H1

Blatt 2

Fig.2
7
13
18
5
8
4
6
2
9
10
11
3

Blatt 3

13
19
11
h
H
7
28
29
H1
11'
9
16
10
4
31
29'
30
1
2

FIG. 3

9
13
28
11
22
23
19
21
4
2
16
11'

FIG. 4

Blatt 4

FIG. 5

9
8
7
13
26
25
4 a
10
24
4 b
2
2a
27
1
8
7
13
9
26
10
2
25
27
24


FIG. 6

9
8
h
29
25
H
36
26
H1
10
24
2a
30
27
2
35
34
33
32

FIG. 7

8
36
32
9
7
25
26
24
2a
2
30'

FIG. 8

Blatt 6

SCHNITT A-A
8b1
8b2
B
8
B
h
9
H
h
H1
H
47
43
H1
4e
43a
4g
44
40
8a
45
4f
43b
9
43
43a
4e
4g
9
40
A
A
8b2
8b1
8
SCHNITT B-B

FIG. 9

FIG. 10

C
41
8
8b2
8b1
hII
HII
7
H1II
h
H max
H min
H
hI
H1
9
HI
H1I
4e
4f
4g
43a
44
A
B
45
C

FIG. 11

Blatt 8

43
4f
4g
43a

Fig. 13

SCHNITT A-B

44
43a
4g
4f
4e

SCHNITT C C

Fig. 12

Fig. 16

FIG.17

FIG.14

SCHNITT B-B

Fig. 18

SCHNITT A-A

FIG.15

8
7
8'
46
58
59
63
2a
62'
4a1
4a2
37
4b
2b
2
1
4a2
8
8
7
61
46
2 a
60
62
4a1
28'
37
4b
2b
1
2

FIG.19

FIG. 20

B
9
2a
8 2
8 1
7
B
67
65
4a
66
66
4b
64
37
2b
A
7
2a
8 2
8 1
66
67
2a
65
2b
46
9
A
Blatt 11
0037855
Fig. 21
Schnitt A-A

Fig. 22
Schnitt B-B

Blatt 12

4
2a
8
46
69
68
8'
9
64
4a1
4a2
4b
2b
10
Fig. 24
46
69
68
8
9
8'
2a
7
64
4a2
4a1
4
2b
4b
37
Fig. 23

71
Fig. 25
Schnitt B-B
8'
8 1
7
A
A
8 2
9
70
4 a 2
4 a 1
65
2 a
64
4
4 b
2 b
37
72

69
Fig. 26
56
Schnitt A-A
4
64
57
68
7a
71
9
70
2 a
7
B
B
37
7b

0037855
Nummer der Anmeldung
EP 80 10 8098

Europäisches Patentamt

# EUROPÄISCHER RECHERCHENBERICHT

| EINSCHLÄGIGE DOKUMENTE | | | KLASSIFIKATION DER ANMELDUNG (Int. Cl.) |
|---|---|---|---|
| Kategorie | Kennzeichnung des Dokuments mit Angabe, soweit erforderlich, der maßgeblichen Teile | betrifft Anspruch | |
| | FR - E - 86 277 (SOCIETE DE MECANIQUE ET DE TRANSPORTS) * Insgesamt * -- | 1,3, 12,16-19,29 | B 01 D 17/02 |
| | DE - A - 2 853 725 (ACHENBACH BUSCHHUTTEN GmbH) * Seite 7, Zeile 3 - Seite 8, Zeile 25 * -- | 1,2, 12,17, 18 | |
| | CH - A - 542 154 (F. LOOSLI - S. SCHALLER) * Insgesamt * -- | 1,3, 12,13, 15-19, 22,29 | RECHERCHIERTE SACHGEBIETE (Int. Cl.) B 01 D 17/02 E 03 F 5/16 |
| | DE - C - 586 728 (V. QUEHL) * Anspruch 1 * -- | 35 | |
| A | DE - A - 2 800 061 (NATIONAL MARINE SERVICE, INC.) | | |
| A | DE - B - 1 484 845 (O. PAUSER) | | |
| A | DE - C - 651 986 (G. HERRMANN) ---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 30-03-1981 | CECCHINI |

EPA form 1503.1 06.78